# EUROPÄISCHE PATENTANMELDUNG

(11) **EP 1 544 204 A1**
(43) Veröffentlichungstag der Anmeldung: **22.06.2005**
(21) Anmeldenummer: 03029160.3
(22) Anmeldetag: 18.12.2003
(51) Int. Cl.: C07F 7/18

(54) **Aldiminoalkylsilane**

(71) Anmelder: Sika Technology AG, 6340 Baar (CH)
(72) Erfinder: Burckhardt, Urs, 8057 Zürich (CH)
(74) Vertreter: Isler, Jörg

(57) **Zusammenfassung**

Die Erfindung betrifft Aldiminoalkylsilane **ALS,** die herstellbar sind aus der Reaktion von mindestens einem Aminoalkylsilan **AS** der Formel (I) und mindestens einem Aldehyd **ALD** der Formel (II), sowie Verfahren zu deren Herstellung. Weiterhin offenbart sind die Verwendung dieser Aldiminoalkylsilane in gegenüber Aminen reaktive Verbindungen enthaltenden Zusammensetzungen, insbesondere Polyurethanzusammensetzungen, sowie in Haftvermittlerzusammensetzungen. Die Aldiminoalkylsilane **ALS** und die diese enthaltenden Zusammensetzungen haben den grossen Vorteil, dass sie geruchsarm oder geruchsfrei sowie lagerstabil sind.

## Beschreibung

### Technisches Gebiet

Die Erfindung betrifft neuartige Aldiminoalkylsilane, erhältlich aus der Umsetzung von Aminoalkylsilanen mit speziellen Aldehyden in geeigneter Weise, geeignet als Haftvermittler in Polymerzusammensetzungen, insbesondere feuchtigkeitshärtenden Polyurethanzusammensetzungen, und als Bestandteil von Haftvermittlerzusammensetzungen. Die Aldiminoalkylsilane sind unter Ausschluss von Feuchtigkeit zusammen mit isocyanatgruppenhaltigen Polyurethanzusammensetzungen lagerstabil und verursachen bei ihrer Anwendung keine oder höchstens eine geringe Geruchsbildung.

### Stand der Technik

Es ist bekannt, dass Organoalkoxysilane geeignet sind als Haftvermittler zwischen Polymerzusammensetzungen wie beispielsweise Polyurethanzusammensetzungen und Substraten wie beispielsweise Glas, Beton oder diversen Metallen, beschrieben beispielsweise in "Silanes and Other Coupling Agents", Hrsg. K.L. Mittal, VSP 1992, Seite 21ff. Sie können beispielsweise eingesetzt werden als Voranstriche, als Additive in Primern, zur Vorbehandlung von Füllstoffen oder als Additive in Klebstoffen, Dichtstoffen und Beschichtungen, wobei sie die Haftung derselben auf diversen Substraten verbessern können.

Als Haftvermittler von besonderem Interesse sind Aminoalkylsilane. Ihre Aminogruppe kann eine chemische Bindung mit Polymerzusammensetzungen wie beispielsweise Polyurethanzusammensetzungen eingehen, beispielsweise durch Reaktion mit einer Isocyanatgruppe. Um die Haftung von Polymerzusammensetzungen auf Substraten wie beispielsweise Glas zu verbessern, werden oft Aminoalkylsilane eingesetzt, wobei diese üblicherweise in verdünnter Form, als Voranstrich oder als Primer, auf das Substrat aufgetragen werden, bevor die Polyurethanzusammensetzung darauf appliziert wird. Um diesen zusätzlichen Arbeitsschritt der Substratvorbehandlung einzusparen, wäre es wünschenswert, Aminoalkylsilane als Haftvermittler direkt in die Polymerzusammensetzung einzubringen. Im Falle von feuchtigkeitshärtenden Polyurethanzusammensetzungen, welche freie Isocyanatgruppen enthalten, ist dies jedoch problematisch, da die Aminoalkylsilane mit den Isocyanatgruppen unmittelbar reagieren, dadurch ihre Wirkung als Haftvermittler grösstenteils verlieren und zu einer ungenügenden Lagerstabilität der Zusammensetzungen führen. Um die guten Eigenschaften von Aminoalkylsilanen als Haftvermittler in feuchtigkeitshärtenden Polyurethanzusammensetzungen nutzen zu können, wäre es deshalb von Vorteil, die Aminoalkylsilane in einer gegenüber Isocyanatgruppen vorerst nicht reaktiven Form in die Zusammensetzung einzubringen.

Es ist bekannt, dass Amine durch ihre Ueberführung in Aldimine in eine gegenüber Isocyanatgruppen nicht reaktive Form gebracht werden können. Nach Kontakt mit Wasser hydrolysieren sie unter Freisetzung von Aldehyden wieder zu Aminen.

US 2,942,019 und US 3,681,420 beschreiben Iminoalkylsilane, hergestellt aus Aminoalkylsilanen und Aldehyden (führt zu Aldiminoalkylsilanen) oder Ketonen (führt zu Ketiminoalkylsilanen). Aus EP 0 164 520 sind isocyanatgruppenhaltige Polyurethanzubereitungen bekannt, welche einen Haftvermittler in Form von Aldimino- oder Ketiminogruppen-haltigen Organoalkoxysilanen enthalten.

Diese aus dem Stand der Technik bekannten Iminoalkylsilane weisen zwei Schwierigkeiten auf. Einerseits ist ihre Lagerstabilität zusammen mit feuchtigkeitshärtenden Polyurethanzusammensetzungen, insbesondere solchen, welche reaktive aromatische Isocyanatgruppen enthalten, ungenügend, das heisst, die Viskosität der Polyurethanzusammensetzung steigt während der Lagerung, verursacht durch die Anwesenheit des Iminoalkylsilans, stark an. Andererseits setzen viele der genannten Iminoalkylsilane bei ihrer Hydrolyse Aldehyde oder Ketone frei, welche einen intensiven, störenden Geruch aufweisen, was für Personen, welche nahen Kontakt zu solchen Substanzen haben, unangenehm ist und Kopfschmerzen, Übelkeit oder andere gesundheitliche Schwierigkeiten auslösen kann. Deshalb sind geruchsintensive Aldehyde oder Ketone, beziehungsweise die davon abgeleiteten Iminoalkylsilane, nur begrenzt einsetzbar, da stets auf eine gute Belüftung geachtet werden muss oder das Tragen eines Atemschutzes erforderlich ist. Sie sind deshalb nicht geeignet als Haftvermittler in Zusammensetzungen, welche möglichst ohne Geruchsbildung aushärten sollen, beispielsweise solchen, welche im Innern von geschlossenen Räumen zur Anwendung gelangen.

In US 5,134,234 werden ebenfalls Iminoalkylsilane beschrieben. Deren Herstellung erfolgt in einem aufwändigen mehrstufigen Verfahren, welches von schwer erhältlichen, teuren und toxikologisch bedenklichen Isocyanatoalkylsilanen ausgeht.

EP 0 985 693 erwähnt Iminoalkylsilane, welche lagerstabil sind zusammen mit speziellen aliphatischen Isocyanaten, welche an ein tertiäres oder sekundäres C-Atom gebundene Isocyanatgruppen enthalten und dadurch eine niedrige Reaktivität aufweisen. Zusammen mit den viel reaktiveren aromatischen Isocyanatgruppen sind die meisten der erwähnten Iminoalkylsilane aber nicht lagerstabil. Die erwähnten Iminoalkylsilane setzen bei ihrer Hydrolyse geruchsintensive Aldehyde oder Ketone frei und sind deshalb für viele Anwendungen nicht geeignet. Des weiteren wird bei der in der Patentschrift beschriebenen Herstellung der Iminoalkylsilane das entstehende Wasser nicht entfernt, was zwangsläufig zu einem hohen Anteil an Kondensationsprodukten in Form von Organosiloxanen führt. Um wirkungsvolle Haftvermittler zu sein, sollten die Aldiminoalkylsilane aber erfahrungsgemäss nicht zu stark vorkondensiert sein.

Aldiminoalkylsilane, welche in einem einfachen Verfahren in guter Qualität herstellbar sind, unter Ausschluss von Feuchtigkeit zusammen mit isocyanatgruppenhaltigen Polyurethanzusammensetzungen, besonders auch solchen mit reaktiven aromatischen Isocyanatgruppen, lagerstabil sind, und welche bei ihrer Hydrolyse keine oder höchstens eine geringe Geruchsbildung verursachen, sind bisher nicht bekannt.

### Darstellung der Erfindung

Aufgabe der vorliegenden Erfindung ist es, neuartige Aldiminoalkylsilane zur Verfügung zu stellen, welche in einem einfachen Verfahren in guter Qualität herstellbar sind, unter Ausschluss von Feuchtigkeit zusammen mit isocyanatgruppenhaltigen Polyurethanzusammensetzungen, besonders auch solchen mit reaktiven aromatischen Isocyanatgruppen, lagerstabil sind, und bei ihrer Hydrolyse keine oder höchstens eine geringe Geruchsbildung verursachen. Solche Aldiminoalkylsilane können die Haftung von Polymerzusammensetzungen auf diversen Substraten verbessern. Sie sind beispielsweise geeignet als Zusatz zu feuchtigkeitshärtenden Polyurethanzusammensetzungen oder als Bestandteil von Haftvermittlerzusammensetzungen.

Es wurde gefunden, dass Aldiminoalkylsilane, welche die genannten Bedingungen erfüllen, auf einfache Weise und in guter Qualität erhältlich sind durch die Umsetzung von mindestens einem Aminoalkylsilan mit mindestens einem speziellen aliphatischen Aldehyd, der in α-Stellung zur Aldehyd-Carbonylgruppe ein tertiäres Kohlenstoffatom aufweist, das heisst ein Kohlenstoffatom, welches keine Bindung zu einem Wasserstoffatom besitzt. Als Aldiminoalkylsilane von guter Qualität werden solche bezeichnet, welche nur zu einem geringen Anteil in kondensierter Form (als Organosiloxane) vorliegen. Die Schwierigkeit, Aldiminoalkylsilane in guter Qualität herzustellen, liegt darin begründet, dass bei der Bildung der Aldiminogruppe aus einer Amino- und einer Aldehydgruppe ein Mol Wasser pro Mol Aminogruppe frei wird. Dies ist insofern problematisch, als die anwesenden Silangruppen durch das entstehende Wasser unerwünschterweise hydrolysiert werden können und sich Kondensationsprodukte in Form von Organosiloxanen bilden können. Tritt dies ein, werden Aldiminoalkylsilane von schlechter Qualität erhalten, welche keine oder eine ungenügende Wirkung als Haftvermittler aufweisen, hochviskos sind oder inhomogene Anteile in Form von suspendierten Kondensationsprodukten enthalten.

Es hat sich gezeigt, dass Aldiminoalkylsilane von ausgezeichneter Qualität erhalten werden, wenn das bei der Reaktion des Aminoalkylsilans mit dem Aldehyd gebildete Wasser in geeigneter Weise aus dem Reaktionsgemisch entfernt wird, bevor es die Silangruppe hydrolysieren kann.

Die erfindungsgemässen Aldiminoalkylsilane sind zusammen mit feuchtigkeitshärtenden Polyurethanzusammensetzungen über mehrere Wochen und Monate lagerstabil. Dies gilt besonders auch dann, wenn die Polyurethanzusammensetzungen reaktive aromatische Isocyanatgruppen aufweisen, wie sie beispielsweise in 4,4'-Diphenylmethandiisocyanat (MDI) oder 2,4- und 2,6-Toluylendiisocyanat (TDI) vorkommen. Im Gegensatz dazu sind die meisten Iminoalkylsilane nach dem Stand der Technik zusammen mit isocyanatgruppenhaltigen Polyurethanzusammensetzungen, vor allem solchen mit reaktiven aromatischen Isocyanatgruppen, nur kurzzeitig oder gar nicht lagerstabil und führen bei der Lagerung zu einer deutlichen bis starken Erhöhung der Viskosität der Polyurethanzusammensetzung.

Ein weiterer wichtiger Aspekt der erfindungsgemässen Aldiminoalkylsilane ist die Tatsache, dass sie vor, während und nach ihrer Anwendung keinen oder höchstens einen geringen Geruch verursachen. Dies wird dadurch erreicht, dass der zur Herstellung der Aldiminoalkylsilane verwendete Aldehyd, welcher bei der Anwendung der Aldiminoalkylsilane durch Hydrolyse wieder freigesetzt wird, geruchsarm oder geruchsfrei ist. Somit sind die erfindungsgemässen Aldiminoalkylsilane geeignet als Zusatz zu Polymerzusammensetzungen, insbesondere feuchtigkeitshärtenden Polyurethanzusammensetzungen, welche vor, während und nach ihrer Aushärtung keine oder nur eine geringe Geruchsbildung verursachen sollen, wie sie beispielsweise für Abdichtungen, Verklebungen oder Beschichtungen in geschlossenen Räumen, wie beispielsweise im Innern von Fahrzeugen oder Gebäuden, benötigt werden. Sie sind ferner geeignet als Bestandteil von Haftvermittlerzusammensetzungen, insbesondere solchen mit einer langen Offenzeit.

### Wege zur Ausführung der Erfindung

Die vorliegende Erfindung betrifft Aldiminoalkylsilane **ALS,** welche erhältlich sind aus mindestens einem Aminoalkylsilan **AS** gemäss Formel (I) und mindestens einem Aldehyd **ALD** gemäss Formel (II). 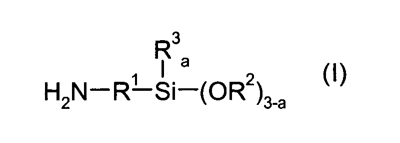 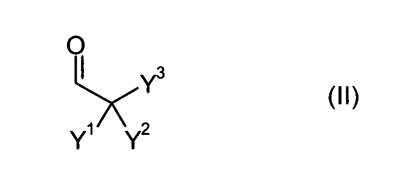
R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
R² steht für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe.
R³ steht für eine Alkylgruppe mit 1 bis 8 C-Atomen, bevorzugt für eine Methyl- oder für eine Ethylgruppe, insbesondere für eine Methylgruppe.
a steht für 0, 1 oder 2.
Y¹ und Y² stellen entweder, unabhängig voneinander, je einen organischen Rest dar; oder sie bilden zusammen einen carbocyclischen oder heterocyclischen Ring, welcher eine Ringgrösse zwischen 5 und 8, bevorzugt 6, Atomen aufweist.
Y³ steht entweder für eine substituierte oder unsubstituierte Alkylgruppe, welche mindestens ein Heteroatom aufweist;
oder für eine verzweigte oder unverzweigte Alkyl- oder Alkylengruppe mit mindestens 10 C-Atomen;
oder für eine substituierte oder unsubstituierte Aryl- oder Arylalkylgruppe;
oder für O-R⁴ oder 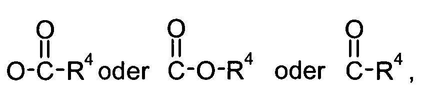 wobei R⁴ seinerseits für eine Alkyl-, Arylalkyl- oder Arylgruppe mit mindestens 3 C-Atomen steht und jeweils substituiert oder unsubstituiert ist.

Die Vorsilbe "Poly" in Substanzbezeichnungen wie "Polyol", "Polyisocyanat", "Polyamin" oder "Polyaldimin" weist im vorliegenden Dokument darauf hin, dass die jeweilige Substanz formal mehr als eine der in ihrer Bezeichnung vorkommenden funktionellen Gruppe pro Molekül enthält.

Mit dem Begriff "Polymer" wird im vorliegenden Dokument einerseits ein Kollektiv von chemisch einheitlichen, sich aber in Bezug auf Polymerisationsgrad, Molmasse und Kettenlänge unterscheidenden Makromolekülen bezeichnet, das durch eine Polyreaktion (Polymerisation, Polyaddition, Polykondensation) hergestellt wurde. Andererseits umfasst der Begriff "Polymer" in diesem Dokument auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können.

Mit dem Begriff "Polymerzusammensetzung" wird im vorliegenden Dokument eine homogene oder heterogene Mischung von Substanzen bezeichnet, die aus einem oder mehreren Polymeren besteht oder Polymere zu einem wesentlichen Teil enthält.

Der Begriff "Polyurethan" umfasst im vorliegenden Dokument sämtliche Polymere, welche nach dem Diisocyanat-Polyadditions-Verfahren hergestellt werden. Dies schliesst auch solche Polymere ein, die nahezu oder gänzlich frei sind von Urethangruppen, wie Polyether-Polyurethane, Polyester-Polyurethane, Polyether-Polyharnstoffe, Polyharnstoffe, Polyester-Polyharnstoffe, Polyisocyanurate, Polycarbodiimide, usw.

Unter "Organoalkoxysilanen" oder kurz "Silanen" werden im vorliegenden Dokument spezielle Silicium-organische Verbindungen verstanden, in denen zum einen mindestens eine, üblicherweise zwei oder drei Alkoxygruppen direkt an das Silicium-Atom gebunden sind (über eine Si-O-Bindung), und die zum anderen mindestens einen direkt an das Silicium-Atom (über eine Si-C-Bindung) gebundenen organischen Rest aufweisen. Entsprechend dazu bezeichnet der Begriff "Silangruppe" im vorliegenden Dokument die an den organischen Rest des Organoalkoxysilans gebundene Silicium-haltige Gruppe. Die Organoalkoxysilane, beziehungsweise deren Silangruppen, haben die Eigenschaft, bei Kontakt mit Feuchtigkeit zu hydrolysieren. Dabei bilden sich Organosilanole, das heisst Silicium-organische Verbindungen enthaltend eine oder mehrere Silanolgruppen (Si-OH-Gruppen) und, durch nachfolgende Kondensationsreaktionen, Organosiloxane, das heisst Silicium-organische Verbindungen enthaltend eine oder mehrere Siloxangruppen (Si-O-Si-Gruppen).

Unter "Aminoalkylsilanen" werden im vorliegenden Dokument spezielle Organoalkoxysilane verstanden, deren direkt an das Silicium-Atom gebundener organischer Rest mindestens eine primäre Aminogruppe (NH₂-Gruppe) trägt.

Unter "Aldiminoalkylsilanen" werden im vorliegenden Dokument spezielle Organoalkoxysilane verstanden, deren direkt an das Silicium-Atom gebundener organischer Rest mindestens eine Aldiminogruppe (CH=N-Gruppe) trägt.

Aldiminoalkylsilane **ALS** sind herstellbar aus mindestens einem Aminoalkylsilan **AS** gemäss Formel (I) und mindestens einem Aldehyd **ALD** gemäss Formel (II) durch eine Kondensationsreaktion unter Freisetzung von Wasser. Kondensationsreaktionen zwischen Aminen und Aldehyden sind bestens bekannt und beschrieben, beispielsweise in Houben-Weyl, "Methoden der organischen Chemie", Vol. XI/2, Seite 73 ff. Im vorliegenden Fall wird als Amin ein Aminoalkylsilan verwendet. Dies beinhaltet die zusätzliche Schwierigkeit, dass das bei der Kondensation freigesetzte Wasser zu einer Hydrolyse der Silangruppen führen kann. Diese Reaktion ist jedoch unerwünscht und muss zur Erhaltung eines qualitativ guten Produktes weitgehend unterdrückt werden. Andernfalls bilden sich unter erneuter Freisetzung von Wasser Kondensationsprodukte in Form von Organosiloxanen, im vorliegenden Fall also Moleküle, welche aus zwei oder mehr über Siloxangruppen verbundenen Aldiminoalkylsilanen bestehen. Dies ist insofern problematisch, als diese Kondensationsprodukte zum Aufbau von Haftung auf einem Substrat nur beschränkt oder gar nicht mehr zur Verfügung stehen, und deshalb solche qualitativ schlechten Aldiminoalkylsilane ihre erwünschte Wirkung als Haftvermittler weitgehend verlieren. Es ist für die Herstellung eines Aldiminoalkylsilans **ALS** von guter Qualität entscheidend, eine Herstellmethode zu wählen, bei welcher die Hydrolyse der Silangruppen möglichst unterdrückt wird.

Zur Herstellung eines Aldiminoalkylsilans **ALS** wird eine Methode bevorzugt, bei der das Aminoalkylsilan **AS** vorgelegt und der Aldehyd **ALD** zugetropft wird. Entscheidend ist, dass bereits während der Umsetzung das gebildete Wasser aus der Reaktionsmischung entfernt wird, beispielsweise indem durch dauerndes Anlegen von Vakuum das bei der Kondensation freiwerdende Wasser sofort abgezogen wird, oder indem' dieses durch eine Wasser absorbierende Substanz, wie beispielsweise ein geeignetes Molekularsieb, entfernt wird. Die Reaktion kann bei Temperaturen von 5 °C bis 250 °C durchgeführt werden. Bevorzugt wird jedoch eine Reaktionstemperatur im Bereich von 20 - 100 °C.

Es ist ebenfalls möglich, ein Aldiminoalkylsilan **ALS** herzustellen, indem der Aldehyd **ALD** vorgelegt wird und das Aminoalkylsilan **AS** zugetropft wird. Auf diese Weise entstehen jedoch erfahrungsgemäss Aldiminoalkylsilane von minderer Qualität, welche oft einen Niederschlag aufweisen, verursacht durch die übermässige Bildung von Kondensationsprodukten.

Ueblicherweise werden solche Reaktionen in Anwesenheit eines Lösemittels durchgeführt, welches mit Wasser ein Azeotrop bildet, wobei das Wasser zusammen mit dem Lösemittel aus der Reaktionsmischung entfernt wird. Bevorzugt ist jedoch eine Herstellung des Aldiminoalkylsilans **ALS** unter Verwendung desjenigen Alkohols, welcher bei der Hydrolyse der Silangruppen freigesetzt wird - Methanol bei der Verwendung eines Methoxysilans, beziehungsweise Ethanol bei Verwendung eines Ethoxysilans. Es wurde beobachtet, dass beim Vorlegen des Aminoalkylsilans **AS** im entsprechenden Alkohol und Zutropfen des Aldehyds **ALD** unter sofortiger Entfernung des Wassers Aldiminoalkylsilane **ALS** von hervorragender Qualität erhalten werden. Es ist aber auch möglich, Aldiminoalkylsilane **ALS** von guter Qualität zu erhalten, indem bei ihrer Herstellung ganz auf den Einsatz von Lösemitteln verzichtet wird. Dabei wird das Aminoalkylsilan **AS** vorgelegt und der Aldehyd **ALD** im Vakuum zugetropft.

In einer weiteren, bevorzugten Herstellungsform werden Aldiminoalkylsilane **ALS** in, oder zusammen mit, Polyaldiminen hergestellt. Dabei wird entweder zuerst ein Polyaldimin durch Umsetzen eines Polyamins mit einem Aldehyd, insbesondere einem Aldehyd **ALD** der Formel (II), unter Entfernung von Wasser hergestellt und anschliessend, in diesem Polyaldimin, ein Aldiminoalkylsilan **ALS** durch Umsetzen eines Aminoalkylsilans **AS** mit einem Aldehyd **ALD** unter Entfernung von Wasser hergestellt. Oder die Herstellung des Aldiminoalkylsilans **ALS** und des Polyaldimins geschieht gleichzeitig, indem eine Mischung eines Aminoalkylsilans **AS** und eines Polyamins mit einem Aldehyd **ALD** unter Entfernung von Wasser umgesetzt wird. Bevorzugt werden diese Umsetzungen ohne Verwendung von Lösemitteln durchgeführt. Die auf solche Weise erhaltenen Lösungen von Aldiminoalkylsilanen **ALS** in Polyaldiminen zeichnen sich durch sehr niedrige Gehalte an Kondensationsprodukten und niedrige Viskositäten aus. Die Polyaldimine werden dabei hergestellt aus mindestens einem Polyamin mit primären aliphatischen Aminogruppen und mindestens einem Aldehyd durch eine Kondensationsreaktion unter Freisetzung von Wasser mittels bekannten Verfahren, beschrieben beispielsweise in Houben-Weyl, "Methoden der organischen Chemie", Vol. XI/2, Seite 73 ff.

Für die Herstellung des Aldiminoalkylsilans **ALS** werden die Aldehydgruppen des Aldehyds **ALD** in Bezug auf die primären Aminogruppen des Aminoalkylsilans **AS** stöchiometrisch oder in stöchiometrischem Überschuss eingesetzt.

Bei der Herstellung eines Aldiminoalkylsilans **ALS** können gegebenenfalls Katalysatoren mitverwendet werden, zum Beispiel Säuren wie beispielsweise Alkylbenzolsulfonsäuren, Alkylsulfonsäuren, Trifluoressigsäure, saure Phosphorsäureester, Mineralsäuren, Bortrifluoridkomplexe oder Aluminiumchloridkomplexe.

Es ist weiterhin möglich, die Aldiminoalkylsilane **ALS** nach erfolgter Herstellung in einem zusätzlichen Arbeitsschritt, beispielsweise durch Destillation, zu reinigen und dadurch vollständig von eventuell vorhandenen Kondensationsprodukten zu trennen.

Als Aminoalkylsilan **AS** zur Herstellung eines Aldiminoalkylsilans **ALS** sind Verbindungen der Formel (I) geeignet. 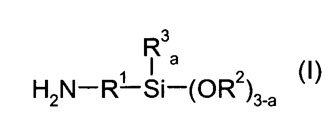
R¹ steht hierbei für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen.
R² steht für eine Alkylgruppe mit 1 bis 5 C-Atomen, bevorzugt für eine Methylgruppe oder für eine Ethylgruppe oder für eine Isopropylgruppe, insbesondere für eine Methylgruppe oder für eine Ethylgruppe.
R³ steht für eine Alkylgruppe mit 1 bis 8 C-Atomen, bevorzugt für eine Methyl- oder für eine Ethylgruppe, insbesondere für eine Methylgruppe.
a steht für 0, 1 oder 2.
Als R¹ bevorzugt wird eine Methylen-, Propylen-, Methylpropylen-, Butylen- oder Dimethylbutylen-Gruppe, insbesondere eine Propylengruppe.

Als geeignete Aminoalkylsilane **AS** der Formel (I) seien beispielsweise die folgenden erwähnt:
3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyl-dimethoxymethylsilan, Aminomethylmethoxydimethylsilan, N-(2-Aminoethyl)-3-aminopropyl-trimethoxysilan, N-(2-Aminoethyl)-3-aminopropyl-dimethoxymethylsilan, 7-Amino-4-oxaheptyldimethoxymethylsilan, sowie deren Analoge mit Ethoxy- oder Isopropoxy- anstelle der Methoxygruppen.
Als Aminoalkylsilane **AS** der Formel (I) bevorzugt sind 3-Aminopropyl-trimethoxysilan, 3-Aminopropyl-triethoxysilan, 4-Amino-3,3-dimethylbutyl-trimethoxysilan, N-(2-Aminoethyl)-3-aminopropyl-trimethoxysilan oder N-(2-Aminoethyl)-3-aminopropyl-triethoxysilan, insbesondere 3-Aminopropyl-trimethoxysilan und 3-Aminopropyl-triethoxysilan.

Sollen Aldiminoalkylsilane **ALS** in einer Mischung mit Polyaldiminen hergestellt werden, so eignen sich zur Herstellung der Polyaldimine handelsübliche Polyamine mit primären aliphatischen Aminogruppen, wie sie unter anderem für zweikomponentige Polyurethane verwendet werden. Solche Polyamine enthalten pro Molekül formal zwei oder mehr primäre Aminogruppen (NH₂-Gruppen), die an einen aliphatischen, cycloaliphatischen oder arylaliphatischen Rest gebunden sind. Als Beispiele seien die folgenden Polyamine erwähnt: Ethylendiamin, 1,2- und 1,3-Propandiamin, 2-Methyl-1,2-propandiamin, 2,2-Dimethyl-1,3-propandiamin, 1,3- und 1,4-Butandiamin, 1,3-und 1,5-Pentandiamin, 1,6-Hexamethylendiamin, 2,2,4- und 2,4,4-Trimethylhexamethylendiamin und Mischungen davon, 1,7-Heptandiamin, 1,8-Octandiamin, 4-Aminomethyl-1,8-octandiamin, 1,9-Nonandiamin, 1,10-Decandiamin, 1,11-Undecandiamin, 1,12-Dodecandiamin, Methyl-bis-(3-aminopropyl)amin, 1,5-Diamino-2-methylpentan (MPMD), 1,3-Diaminopentan (DAMP), 2,5-Dimethyl-1,6-hexamethylendiamin, cycloaliphatische Polyamine wie 1,2-, 1,3- und 1,4-Diaminocyclohexan, Bis-(4-aminocyclohexyl)-methan, Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 1-Cyclohexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo[5.2.1.0^{2,6}]decan, 1,4-Diamino-2,2,6-trimethylcyclohexan (TMCDA), 3,9-Bis-(3-aminopropyl)-2,4,8,10-tetraoxaspiro-[5.5]undecan, 1,3- und 1,4-Xylylendiamin, Ethergruppen-haltige aliphatische Polyamine wie Bis-(2-aminoethyl)ether, 4,7-Dioxadecan-1,10-diamin, 4,9-Dioxadodecan-1,12-diamin und höhere Oligomere davon, Polyoxyalkylen-Polyamine mit theoretisch zwei oder drei Aminogruppen, erhältlich beispielsweise unter dem Namen Jeffamine® (hergestellt von Huntsman Chemicals), sowie Mischungen der vorgenannten Polyamine.

Bevorzugte Polyamine sind 1,6-Hexamethylendiamin, MPMD, DAMP, 2,2,4- und 2,4,4-Trimethylhexamethylendiamin, 4-Aminomethyl-1,8-octandiamin, IPDA, 1,3- und 1,4-Xylylendiamin, 1,3- und 1,4-Bis-(aminomethyl)-cyclohexan, Bis-(4-aminocyclohexyl)-methan, Bis-(4-amino-3,-methylcyclo-hexyl)-methan, 3(4),8(9)-Bis-(aminomethyl)-tricyclo[5.2.1.0^{2,6}]decan, 1,2-, 1,3-und 1,4-Diaminocyclohexan, 1,4-Diamino-2,2,6-trimethylcyclohexan, Polyoxyalkylen-Polyamine mit theoretisch zwei oder drei Aminogruppen, insbesondere Jeffamine® EDR-148, Jeffamine® D-230, Jeffamine® D-400 und Jeffamine® T-403, sowie insbesondere Mischungen von zwei oder mehr der vorgenannten Polyamine.

Zur Herstellung eines Aldiminoalkylsilans **ALS** ausgehend von einem Aminoalkylsilan **AS** wird ein Aldehyd **ALD** der folgenden Formel (II) verwendet. 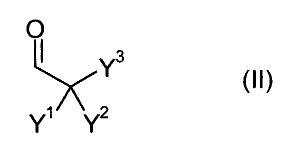
Y¹ und Y² stellen entweder, unabhängig voneinander, einen organischen Rest dar; oder sie bilden zusammen einen carbocyclischen oder heterocyclischen Ring, welcher eine Ringgrösse zwischen 5 und 8, bevorzugt 6, Atomen aufweist. Bevorzugt sind Y¹ und Y² identisch und stellen insbesondere eine Methylgruppe dar.
Y³ kann für eine substituierte oder unsubstituierte Alkylgruppe stehen, welche mindestens ein Heteroatom aufweist, insbesondere in der Form eines Ether-Sauerstoffs, einer Carboxyl- oder einer Estergruppe.
Y³ kann aber auch für eine verzweigte oder unverzweigte Alkyl- oder Alkylengruppe mit mindestens 10 C-Atomen stehen.
Weiterhin kann Y³ auch für eine substituierte oder unsubstituierte Aryl- oder Arylalkylgruppe stehen.
Schliesslich kann Y³ auch für einen Rest der Formel für O-R⁴ oder 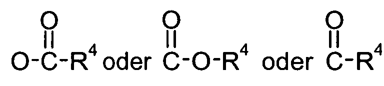 stehen, wobei R⁴ seinerseits für eine Alkyl-, Arylalkyl- oder Arylgruppe mit mindestens 3 C-Atomen steht und jeweils substituiert oder unsubstituiert ist.

Die Aldehyde **ALD** der Formel (II) weisen die Eigenschaft auf, dass sie entweder geruchsarm oder geruchsfrei sind, und deshalb keine oder höchstens eine geringe Geruchsbildung verursachen.

Unter einer "geruchsarmen" Substanz und einer Substanz, welche "eine geringe Geruchsbildung verursacht", wird unterschiedslos eine Substanz verstanden, deren Geruch von menschlichen Individuen nur in geringem Masse wahrnehmbar, d.h. riechbar, ist, die also keinen intensiven Geruch aufweist wie beispielsweise Formaldehyd, Acetaldehyd, Isobutyraldehyd, Pivalaldehyd oder Lösemittel wie Aceton, Methylethylketon oder Methylisobutylketon, und wobei dieser geringe Geruch von den meisten menschlichen Individuen nicht als unangenehm oder abstossend empfunden wird.

Unter einer "geruchsfreien" Substanz wird eine Substanz verstanden, die für die meisten menschlichen Individuen nicht riechbar ist, die also keinen wahrnehmbaren Geruch aufweist.

### Beispiele für Verbindungen nach Formel (II) sind:

Ether aus 2-Hydroxy-2-methylpropanal und Alkoholen wie Propanol, Isopropanol, Butanol und 2-Ethylhexanol; Ester aus 2-Formyl-2-methylpropionsäure und Alkoholen wie Propanol, Isopropanol, Butanol und 2-Ethylhexanol; Ester aus 2-Hydroxy-2-methylpropanal und Carbonsäuren wie Buttersäure, Isobuttersäure und 2-Ethylhexansäure; sowie die im folgenden als insbesondere geeignet aufgeführten Aldehyde.

Insbesondere geeignet sind einerseits Verbindungen nach Formel (III), 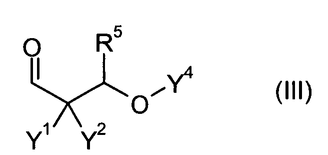
wobei R⁵ für ein Wasserstoffatom oder für eine Alkyl- oder Arylalkyloder Arylgruppe steht und Y⁴ für eine Alkyl-, Arylalkyl- oder Arylgruppe steht und Y¹ und Y² die bereits beschriebene Bedeutung aufweisen.
Als Beispiele für Verbindungen der Formel (III) erwähnt werden sollen Ether aus β-Hydroxyaldehyden, wie sie aus einer gekreuzten Aldol-Reaktion aus Formaldehyd und einem zweiten Aldehyd wie 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd), Diphenylacetaldehyd entstehen und Alkoholen wie Methanol, Ethanol, Propanol, Isopropanol, Butanol, 2-Ethylhexanol oder Fettalkoholen, wie zum Beispiel 3-Methoxy- und 3-Ethoxy- und 3-Propoxy- und 3-Isopropoxy- und 3-Butoxy-, sowie 3-(2-Ethylhexoxy)-2,2-dimethylpropanal.

Insbesondere geeignet sind andererseits Verbindungen nach Formel (IV), 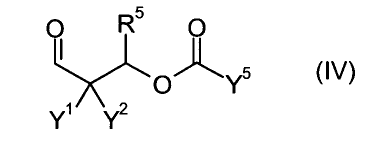
wobei Y¹, Y² und R⁵ die bereits beschriebene Bedeutung haben, und Y⁵ entweder ein Wasserstoffatom darstellt;
oder eine Alkyl- oder Arylalkyl- oder Arylgruppe darstellt, welche gegebenenfalls mindestens ein Heteroatom, insbesondere ein Ether-Sauerstoff, aufweist, gegebenenfalls mindestens eine Carboxylgruppe enthält, und gegebenenfalls mindestens eine Estergruppe enthält;
oder eine einfach oder mehrfach ungesättigte, lineare oder verzweigte Kohlenwasserstoffkette darstellt.

Beispiele für bevorzugte Aldehyde der Formel (IV) sind Produkte einer Veresterung aus den bereits erwähnten β-Hydroxyaldehyden wie 3-Hydroxy-pivalaldehyd, 3-Hydroxy-isobutyraldehyd, 3-Hydroxypropionaldehyd, 3-Hydroxybutyraldehyd, 3-Hydroxyvaleraldehyd 2-Hydroxymethyl-2-methyl-butyr-aldehyd, 2-Hydroxymethyl-2-ethyl-butyraldehyd, 2-Hydroxymethyl-2-methyl-valeraldehyd, 2-Hydroxymethyl-2-ethyl-hexanal, 1-Hydroxymethyl-cyclopentancarbaldehyd, 1-Hydroxymethyl-cyclohexancarbaldehyd 1-Hydroxymethyl-cyclohex-3-encarbaldehyd, 2-Hydroxymethyl-2-methyl-3-phenyl-propionaldehyd, 3-Hydroxy-2-methyl-2-phenyl-propionaldehyd und 3-Hydroxy-2,2-diphenylpropionaldehyd mit Carbonsäuren wie Ameisensäure, Essigsäure, Propionsäure, Buttersäure, Isobuttersäure, 2-Ethyl-capronsäure und Benzoesäure, sowie die im folgenden als besonders bevorzugt aufgeführten Aldehyde.

In einer besonders bevorzugten Ausführungsform werden Aldehyde **ALD** der Formel (IV) verwendet, welche geruchsfrei sind und deren Reste R⁵ und Y⁵ folgendermassen eingeschränkt sind:
R⁵ steht für ein Wasserstoffatom, und
Y⁵ steht einerseits für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff;
oder für eine einfach oder mehrfach ungesättigte, lineare oder verzweigte Kohlenwasserstoffkette mit 11 bis 30 Kohlenstoff-Atomen;
oder für einen Rest der Formel (V) oder (VI). 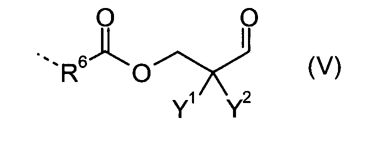 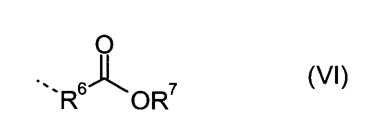
In den Formeln (V) und (VI) steht R⁶ für eine, lineare oder verzweigte oder cyclische, Alkylenkette mit 2 bis 16 Kohlenstoff-Atomen, gegebenenfalls mit mindestens einem Heteroatom, insbesondere mit mindestens einem Ether-Sauerstoff, oder für eine einfach oder mehrfach ungesättigte, lineare oder verzweigte oder cyclische Kohlenwasserstoffkette mit 2 bis 16 Kohlenstoff-Atomen,
und R⁷ steht für eine lineare oder verzweigte Alkylkette mit 1 bis 8 Kohlenstoff-Atomen, und
Y¹ und Y² weisen die bereits beschriebene Bedeutung auf.

Die gestrichelte Linie in den Formeln (V) und (VI) bezeichnet jeweils die Verbindungsstelle.

Die soeben beschriebene Ausführungsform der Erfindung ermöglicht es, nicht nur Aldiminoalkylsilane **ALS** mit einer geringen Geruchsbildung, sondern solche ganz ohne wahrnehmbaren Geruch herzustellen. Dies ist besonders vorteilhaft für Anwendungen im Innenbereich von Bauwerken und Fahrzeugen.

Beispiele für die besonders bevorzugten geruchsfreien Aldehyde **ALD** der Formel (IV), welche zu geruchsfreien Aldiminoalkylsilanen **ALS** führen, sind Veresterungsprodukte aus den bereits genannten β-Hydroxyaldehyden wie 3-Hydroxy-pivalaldehyd, 3-Hydroxy-isobutyraldehyd, 3-Hydroxypropanal, 3-Hydroxybutyraldehyd, 3-Hydroxyvaleraldehyd 2-Hydroxymethyl-2-methylbutyraldehyd, 2-Hydroxymethyl-2-ethyl-butyraldehyd, 2-Hydroxymethyl-2-methyl-valeraldehyd, 2-Hydroxymethyl-2-ethyl-hexanal, 1-Hydroxymethylcyclopentancarbaldehyd, 1-Hydroxymethyl-cyclohexancarbaldehyd 1-Hydroxymethyl-cyclohex-3-encarbaldehyd, 2-Hydroxymethyl-2-methyl-3-phenylpropionaldehyd, 3-Hydroxy-2-methyl-2-phenyl-propionaldehyd und 3-Hydroxy-2,2-diphenyl-propionaldehyd mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, dehydrierte Ricinolsäuren, sowie Fettsäuren aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl.

Bevorzugte Carbonsäuren sind Laurinsäure, Myristinsäure, Palmitinsäure, Stearinsäure, Ölsäure, Linolsäure, Linolensäure, Bernsteinsäure, Adipinsäure, Azelainsäure und Sebacinsäure und technische Gemische von Fettsäuren, welche diese Säuren enthalten.

In einer bevorzugten Herstellmethode eines Aldehyds **ALD** der Formel (IV) wird ein β-Hydroxyaldehyd, beispielsweise einer der bereits genannten β-Hydroxyaldehyde wie 3-Hydroxypivalaldehyd, welcher beispielsweise aus Formaldehyd (oder Paraformaldehyd oder 1,3,5-Trioxan) und Isobutyraldehyd, gegebenenfalls in situ, hergestellt werden kann, mit einer Carbonsäure, insbesondere einer langkettigen Fettsäure, zum entsprechenden Ester umgesetzt, nämlich entweder mit einer Carbonsäure Y⁵-COOH zum entsprechenden Carbonsäureester von beispielsweise 3-Hydroxypivalaldehyd; und / oder mit einem Dicarbonsäuremonoalkylester HOOC-R⁶-COOR⁷ zum Aldehyd der Formel (IV) mit dem Rest Y⁵ nach Formel (VI); und / oder mit einer Dicarbonsäure HOOC-R⁶-COOH zum Aldehyd der Formel (IV), in diesem Falle ein Dialdehyd, mit dem Rest Y⁵ nach Formel (V). Die Formeln (V) und (VI) und Y⁵, R⁶ und R⁷ haben dabei die bereits beschriebene Bedeutung. Diese Veresterung kann ohne die Verwendung von Lösemitteln nach bekannten Methoden erfolgen, beschrieben beispielsweise in Houben-Weyl, "Methoden der organischen Chemie", Vol. VIII, Seiten 516 - 528.

Geeignete Carbonsäuren zur Veresterung mit einem β-Hydroxyaldehyd, beispielsweise mit 3-Hydroxypivalaldehyd, sind beispielsweise die bereits genannten kurzkettigen und langkettigen Carbonsäuren.

Durch die Umsetzung mindestens eines Aminoalkylsilans **AS** nach Formel (I) mit mindestens einem Aldehyd **ALD** nach Formel (II) entstehen beispielsweise Aldiminoalkylsilane **ALS** der Formel (VII).

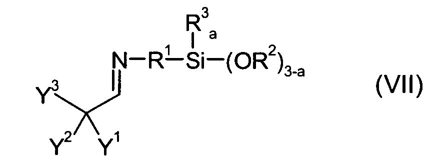

Als Aldehyd **ALD** zur Herstellung eines Aldiminoalkylsilans **ALS** kann auch ein Dialdehyd verwendet werden. Ein Dialdehyd kann, falls gewünscht, zweimal mit einem Aminoalkylsilan **AS** umgesetzt werden, sodass alle Aldehydgruppen zu Aldiminogruppen kondensiert werden. Es ist aber auch möglich, einen Ueberschuss an Aldehydgruppen im Verhältnis zu den Aminogruppen einzusetzen, so dass ein Teil der Aldehydgruppen nicht umgesetzt wird. Wird zur Herstellung eines Aldiminoalkylsilans **ALS** beispielsweise ein Aldehyd **ALD** nach Formel (IV) mit Y⁵ nach Formel (V) verwendet und vollständig, also zweimal, mit einem Aminoalkylsilan **AS** umgesetzt, so entstehen Verbindungen wie in Formel (VIII) dargestellt.

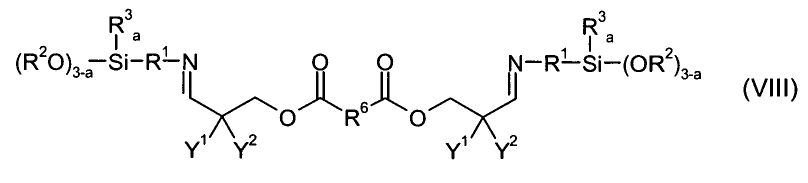

Es können auch Mischungen verschiedener Aminoalkylsilane **AS** und / oder verschiedener Aldehyde **ALD** zur Herstellung eines Aldiminoalkylsilans **ALS** verwendet werden.

Das Aldiminoalkylsilan **ALS** kann gewisse Anteile an Kondensationsprodukten in Form von Organosiloxanen enthalten. Auch bei Anwendung von optimierten, die Bildung solcher Kondensationsprodukte weitgehend unterdrückenden Herstellmethoden enthalten die erhaltenen Aldiminoalkylsilane **ALS** trotzdem stets einen, wenn auch geringen, Anteil an Kondensationsprodukten, der ihre Wirkung als Haftvermittler aber nicht Frage stellt. Wie bereits erwähnt, kann das Aldiminoalkylsilan **ALS,** falls gewünscht, gereinigt werden, beispielsweise mittels Destillation, um allfällige Kondensationsprodukte zu entfernen.

Die Aldiminoalkylsilane **ALS** sind unter Ausschluss von Feuchtigkeit lagerstabil, und zwar allein oder auch in Kombination mit gegenüber Aminen reaktiven Komponenten, wie beispielsweise Isocyanaten. Bei Kontakt mit Wasser hydrolysieren sowohl die Aldiminogruppen als auch die Silangruppen. Wasser kann hierbei im flüssigen oder gasförmigen Aggregatszustand oder in gebundener Form mit dem Aldiminoalkylsilan **ALS** in Kontakt gebracht werden. So kann in einem Hydrolyseverfahren beispielsweise Wasser in Form von Luftfeuchtigkeit auf das Aldiminoalkylsilan **ALS** oder auf eine das Aldiminoalkylsilan **ALS** enthaltende Zusammensetzung einwirken. Ein weiteres Beispiel für ein Hydrolyseverfahren ist das Einmischen von Wasser oder einer Wasser enthaltenden Komponente oder einer Wasser freisetzenden Komponente in eine Aldiminoalkylsilan **ALS** enthaltende Zusammensetzung. Bevorzugt wird das Wasser im gasförmigen Aggregatszustand, besonders bevorzugt in Form von Luftfeuchtigkeit, mit Aldiminoalkylsilan **ALS** in Kontakt gebracht.

Die Aldiminogruppen des Aldiminoalkylsilans **ALS** reagieren bei der Hydrolyse formal zu Aminogruppen, wobei der entsprechende Aldehyd **ALD** freigesetzt wird. In Anwesenheit von gegenüber Aminen reaktiven Gruppen wie beispielsweise Isocyanatgruppen reagieren die Aminogruppen weiter, beispielsweise unter Bildung von Harnstoffgruppen. Dadurch verläuft die Hydrolyse der Aldiminogruppen rasch und vollständig. Der freigesetzte Aldehyd **ALD** ist geruchsfrei oder geruchsarm. Er verursacht also keine oder höchstens eine geringe Geruchsbildung in einer Zusammensetzung wie beispielsweise einem Klebstoff, Dichtstoff oder Belag.

Die Reaktion von gegenüber Aminen reaktiven Komponenten mit dem hydrolysierenden Aldiminoalkylsilan **ALS** muss nicht notwendigerweise über das Aminoalkylsilan erfolgen. Selbstverständlich sind auch Reaktionen mit Zwischenstufen der Hydrolyse des Aldiminoalkylsilans zum Aminoalkylsilan möglich. Beispielsweise ist es denkbar, dass das hydrolysierende Aldiminoalkylsilan in der Form eines Halbaminals direkt mit den gegenüber Aminen reaktiven Komponenten reagiert.

Die Silangruppen des Aldiminoalkylsilans **ALS** reagieren bei der Hydrolyse zu Organosilanolen und, durch nachfolgende Kondensationsreaktionen, zu Organosiloxanen. Die Aldiminoalkylsilane besitzen die Fähigkeit, eine starke Haftung zu diversen Substraten aufzubauen beziehungsweise den Haftungsaufbau einer Polymerzusammensetzung zu einem Substrat zu verbessern. Beim Aufbau einer Haftung sind möglicherweise hauptsächlich die Silanolgruppen beteiligt, welche, anstatt ausschliesslich untereinander zu Organosiloxanen zu kondensieren, zum Teil eine Verbindung mit dem jeweiligen Substrat eingehen.

Um die Hydrolyse sowohl der Aldiminogruppen als auch der Silangruppen zu beschleunigen, kann es vorteilhaft sein, das Aldiminoalkylsilan **ALS** mit geeigneten Katalysatoren zu kombinieren.

Als Katalysatoren für die Hydrolyse der Aldiminogruppen eignen sich beispielsweise organische Carbonsäuren wie Benzoesäure oder Salicylsäure, ein organisches Carbonsäureanhydrid wie Phthalsäureanhydrid oder Hexahydrophthalsäureanhydrid, ein Silylester organischer Carbonsäuren, eine organische Sulfonsäure wie p-Toluolsulfonsäure oder 4-Dodecylbenzolsulfonsäure, oder eine andere organische oder anorganische Säure, oder Mischungen der vorgenannten Säuren.

Als Katalysatoren für die Hydrolyse der Silangruppen eignen sich beispielsweise Organozinnverbindungen wie Dibutylzinndilaurat, Dibutylzinndiacetylacetonat, Bismut-organische Verbindungen oder Bismut-Komplexe, oder aminogruppenhaltige Verbindungen wie beispielsweise 1,4-Diazabicyclo[2.2.2]octan oder 2,2'-Dimorpholinodiethylether.

Die Aldiminoalkylsilane **ALS** sind beispielsweise geeignet als Haftvermittler für Polymerzusammensetzungen wie beispielsweise Klebstoffe, Dichtstoffe oder Beschichtungen auf diversen Substraten. Sie können dabei entweder als Bestandteil der Polymerzusammensetzungen, insbesondere von feuchtigkeitshärtenden Polyurethanzusammensetzungen, eingesetzt werden. Oder sie können als Bestandteil einer Haftvermittlerzusammensetzung beispielsweise in Form eines Reinigers, einer Haftvermittlerlösung, eines Vorbehandlungsmittels oder eines Primers verwendet werden, um die Haftung einer Polymerzusammensetzung auf dem mit der Haftvermittlerzusammensetzung vorbehandelten Substrat zu verbessern.

Geeignete Substrate für die Anwendung von Aldiminoalkylsilanen **ALS** als Haftvermittler sind beispielsweise anorganische Substrate wie beispielsweise Glas, Glaskeramik, Beton, Mörtel, Backstein, Ziegel, Gips und Natursteine wie Granit oder Marmor; Metalle wie Aluminium, Stahl, Buntmetalle, verzinkte Metalle; organische Substrate wie Holz, Kunststoffe wie PVC, Polycarbonate, PMMA, Polyester, Epoxide; beschichtete Substrate wie beispielsweise pulverbeschichtete Metalle; sowie Farben und Lacke, insbesondere Automobildecklacke. Bevorzugt sind Glas, Glaskeramik, Beton, Naturstein, Aluminium und Automobildecklacke.

Insbesondere geeignet sind die Aldiminoalkylsilane **ALS** als Bestandteil von Polymerzusammensetzungen, welche gegenüber Aminen reaktive Komponenten aufweisen, wie beispielsweise isocyanatgruppenhaltige Polyurethanzusammensetzungen, insbesondere solche, die reaktive aromatische Isocyanatgruppen enthalten. Solche Polyurethanzusammensetzungen sind nämlich als Mischung mit Aldiminoalkylsilanen **ALS** mehrere Monate bis zu einem Jahr lagerstabil, ohne dass sie ihre Anwendbarkeit verlieren. Nicht lagerstabil hingegen sind isocyanathaltige Polyurethanzusammensetzungen, insbesondere solche mit reaktiven aromatischen Isocyanatgruppen, welche Aminoalkylsilane oder die meisten Iminoalkylsilane nach dem Stand der Technik enthalten. Beispielsweise nicht lagerstabil zusammen mit aromatische Isocyanatgruppen enthaltenden Polyurethanzusammensetzungen sind Ketiminoalkylsilane. Ebenfalls nicht lagerstabil in solchen Zusammensetzungen sind erfahrungsgemäss Aldiminoalkylsilane, welche Umsetzungsprodukte sind aus Aminoalkylsilanen und primären oder sekundären aliphatischen Aldehyden wie Butyraldehyd oder Isobutyraldehyd, also Aldiminoalkylsilane, welche in α-Stellung zum Kohlenstoffatom der Aldiminogruppe eine CH- oder eine CH₂-Gruppierung aufweisen. Dasselbe gilt für Aldiminoalkylsilane, welche Umsetzungsprodukte sind aus aromatischen Aldehyden wie beispielsweise Benzaldehyd und Aminoalkylsilanen, deren primäre Aminogruppe an ein primäres Kohlenstoffatom gebunden ist, wie beispielsweise 3-Aminopropyl-trimethoxysilan sowie die meisten handelsüblichen Aminoalkylsilane.

Mit den Begriffen "lagerstabil" und "Lagerstabilität" in Zusammenhang mit einer isocyanatgruppenhaltigen Polyurethanzusammensetzung, welche ein Organoalkoxysilan enthält, wird im vorliegenden Dokument jeweils der Sachverhalt bezeichnet, dass die Viskosität dieser Zusammensetzung während der Lagerung unter Feuchtigkeitsausschluss während mehreren Monaten bis zu einem Jahr oder länger, verursacht durch die Anwesenheit des Organoalkoxysilans, nicht oder nur geringfügig ansteigt, und dass die Anwendbarkeit der Zusammensetzung nach der Lagerung weiterhin gegeben ist.

Die Aldiminoalkylsilane **ALS** weisen die Eigenschaft auf, geruchsarm oder geruchsfrei zu sein, sowie bei ihrer Hydrolyse einen geruchsarmen oder geruchsfreien Aldehyd **ALD** freizusetzen. Dadurch sind sie speziell gut geeignet für Anwendungen, die möglichst wenig Geruchsbelastung durch das Produkt erlauben, weder vor, noch während oder nach dessen Anwendung.

Wie bereits erwähnt, können die beschriebenen Aldiminoalkylsilane **ALS** beispielsweise als Bestandteil von feuchtigkeitshärtenden Polyurethanzusammensetzungen eingesetzt werden. Eine solche Polyurethanzusammensetzung besteht aus einem isocyanatgruppenhaltigen Polyurethanpolymer und optional weiteren Komponenten.

Ein geeignetes Polyurethanpolymer für eine solche Polyurethanzusammensetzung wird hergestellt aus mindestens einem Polyisocyanat und mindestens einem Polyol. Die Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Der Überschuss an Polyisocyanat wird so gewählt, dass im resultierenden Polyurethanpolymer nach der Umsetzung aller' Hydroxylgruppen des Polyols beispielsweise ein Gehalt an freien Isocyanatgruppen von 0.1 bis 15 Gewichts-%, bevorzugt 0.5 bis 5 Gewichts-%, bezogen auf das gesamte Polyurethanpolymer, verbleibt. Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Als Polyole für die Herstellung eines solchen Polyurethanpolymers können beispielsweise die folgenden handelsüblichen Polyole oder beliebige Mischungen davon eingesetzt werden:
- Polyoxyalkylenpolyole, auch Polyetherpolyole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2-und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten.

Besonders geeignet sind Polyoxyalkylendiole oder Polyoxyalkylentriole, insbesondere Polyoxypropylendiole oder Polyoxypropylentriole.

Speziell geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxypropylendiole und -triole mit einem Molekulargewicht von 400 bis 8'000 g/mol. Unter "Molekulargewicht" oder "Molgewicht" versteht man im vorliegenden Dokument stets das Molekulargewichtsmittel Mₙ.

Ebenfalls besonders geeignet sind sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.
- Hydroxyfunktionelle Polybutadiene.
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.

Diese genannten Polyole weisen ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Zusätzlich zu diesen genannten Polyolen können niedrigmolekulare zwei- oder mehrwertige Alkohole wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole und andere höherwertige Alkohole, niedrigmolekulare Alkoxylierungsprodukte der vorgenannten zwei- und mehrwertigen Alkohole sowie Mischungen der vorgenannten Alkohole bei der Herstellung des Polyurethanpolymers mitverwendet werden.

Als Polyisocyanate für die Herstellung eines solchen Polyurethanpolymers werden handelsübliche Polyisocyanate verwendet. Als Beispiele seien die folgenden, in der Polyurethanchemie bestens bekannten Polyisocyanate erwähnt:
2,4- und 2,6-Toluylendiisocyanat (TDI) und beliebige Gemische dieser Isomeren, 4,4'-Diphenylmethandiisocyanat (MDI), die stellungsisomeren Diphenylmethandiisocyanate, 1,3- und 1,4-Phenylendiisocyanat, 2,3,5,6-Tetramethyl-1,4-diisocyanatobenzol, 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Cyclohexan-1,3- und -1,4-diisocyanat und beliebige Gemische dieser Isomeren, 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI), 1,4-Diisocyanato-2,2,6-trimethylcyclohexan (TMCDI), m- und p-Xylylendiisocyanat (XDI), 1,3- und 1,4-Tetramethylxylylendiisocyanat (TMXDI), 1,3-und 1,4-Bis-(isocyanatomethyl)-cyclohexan, sowie Oligomere und Polymere der vorgenannten Isocyanate, sowie beliebige Mischungen der vorgenannten Isocyanate. Besonders bevorzugt sind MDI, TDI, HDI und (IPDI sowie deren Mischungen. Am meisten bevorzugt sind MDI und TDI sowie deren Mischungen.

Weitere mögliche Bestandteile der feuchtigkeitshärtenden Polyurethanzusammensetzung sind Polyaldimine, wie sie im Zusammenhang mit der Herstellung der Aldiminoalkylsilane **ALS** bereits beschrieben wurden. Bevorzugt sind dabei Polyaldimine, die durch Umsetzen eines primären aliphatischen Polyamins mit einem Aldehyd, insbesondere einem Aldehyd **ALD** der Formel (II), unter Entfernung von Wasser hergestellt wurden. Es ist insbesondere vorteilhaft, solche Polyaldimine in Form von den bereits beschriebenen Lösungen von Aldiminoalkylsilanen **ALS** in Polyaldiminen einzusetzen.

Als weitere mögliche Bestandteile der feuchtigkeitshärtenden Polyurethanzusammensetzung sollen beispielhaft die folgenden, in der Polyurethanindustrie wohlbekannten Hilfs- und Zusatzmittel erwähnt werden:
Weichmacher, beispielsweise Ester organischer Carbonsäuren oder deren Anhydride, Phthalate, beispielsweise Dioctylphthalat oder Diisodecylphthalat, Adipate, zum Beispiel Dioctyladipat, Sebacate, organische Phosphor- und Sulfonsäureester, Polybutene und andere, mit Isocyanaten nicht reagierende Verbindungen; Reaktivverdünner und Vernetzer, beispielsweise mehrwertige Alkohole, Polyamine, Polyaldimine, Polyketimine oder aliphatische Isocyanate, beispielsweise 1,6-Hexamethylendiisocyanat, 2,2,4- und 2,4,4-Trimethyl-1,6-hexamethylendiisocyanat, 1,12-Dodecamethylendiisocyanat, Cyclohexan-1,3- und 1,4-diisocyanat und beliebige Gemische dieser Isomeren, 1-Isocyanato-3,3,5-trimethyl-5-isocyanatomethylcyclohexan (=Isophorondiisocyanat oder IPDI), Perhydro-2,4'- und -4,4'-diphenylmethandiisocyanat, 1,3- und 1,4-Tetramethylxylylendiisocyanat, Isocyanurate dieser Isocyanate, Oligomere und Polymere dieser Isocyanate sowie ihre Addukte mit Polyolen; anorganische und organische Füllstoffe, zum Beispiel gemahlene oder gefällte Calciumcarbonate, welche gegebenenfalls mit Stearaten beschichtet sind, insbesondere feinteiliges beschichtetes Calciumcarbonat, Russe, Kaoline, Aluminiumoxide, Kieselsäuren und PVC-Pulver oder Hohlkugeln; Fasern, beispielsweise aus Polyethylen; Pigmente; Katalysatoren für die Reaktion der Isocyanatgruppen, beispielsweise Organozinnverbindungen wie Dibutylzinndiacetat, Dibutylzinndilaurat, Dioctylzinndicarboxylat, Dibutylzinndichlorid, Dibutylzinndiacetylacetonat, Alkylzinnthioester, Bismut-organische Verbindungen oder Bismut-Komplexe, aminogruppenhaltige Verbindungen wie beispielsweise 2,2'-Dimorpholinodiethylether, und andere, in der Polyurethanchemie übliche Katalysatoren; Katalysatoren für die Hydrolyse von Aldiminogruppen, beispielsweise organische Carbonsäuren wie Benzoesäure oder Salicylsäure, organische Carbonsäureanhydride wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, oder andere organische oder anorganische Säuren, oder Mischungen der vorgenannten Säuren; Rheologie-Modifizierer wie beispielsweise Verdickungsmittel, zum Beispiel Harnstoffverbindungen, Polyamidwachse, Bentonite oder pyrogene Kieselsäuren; weitere Haftvermittler zusätzlich zu den erfindungsgemässen Aldiminoalkylsilanen **ALS,** insbesondere Silane wie Alkylsilane, Epoxyalkylsilane, Vinylsilane, Methacryloxyalkylsilane und Isocyanatoalkylsilane, sowie oligomere Formen dieser Silane; Trocknungsmittel, beispielsweise p-Tosylisocyanat und andere reaktive Isocyanate, Orthoameisensäureester, Calciumoxid oder Molekularsiebe; Stabilisatoren gegen Wärme, Licht- und UV-Strahlung; flammhemmende Substanzen; oberflächenaktive Substanzen, beispielsweise Netzmittel, Verlaufsmittel, Entlüftungsmittel oder Entschäumer; Fungizide oder das Pilzwachstum hemmende Substanzen; sowie weitere, in der Polyurethanindustrie üblicherweise eingesetzte Substanzen.

Der Gehalt des Aldiminoalkylsilan **ALS** in der Polyurethanzusammensetzung beträgt 0.01 - 10 Gewichts-%, bevorzugt 0.1 - 5 Gewichts-%, insbesondere 0.25 - 2.5 Gewichts-%.

Die beschriebene feuchtigkeitshärtende Polyurethanzusammensetzung wird unter Ausschluss von Feuchtigkeit hergestellt und aufbewahrt und kann in einer geeigneten Verpackung oder Anordnung, wie beispielsweise in einem Fass, einem Beutel oder einer Kartusche, vor ihrer Anwendung während mehreren Monaten bis zu einem Jahr und länger aufbewahrt werden, ohne dass sie ihre Anwendbarkeit verliert.

Die beschriebene feuchtigkeitshärtende Polyurethanzusammensetzung ist beispielsweise geeignet als Dichtstoff aller Art, beispielsweise zum Abdichten von Fugen im Bau, als Klebstoff für das Verkleben von diversen Substraten, beispielsweise zum Verkleben von Bauteilen bei der Herstellung von Automobilen, Schienenfahrzeugen, Schiffen oder anderen industriellen Gütern, sowie als Beschichtung oder Belag für diverse Artikel beziehungsweise variable Substrate. Aufgrund ihrer Eigenschaft, geruchsarm oder geruchsfrei zu sein und keine geruchsintensiven Stoffe freizusetzen, ist sie insbesondere geeignet für Klebe- und Dichtanwendungen im Innern von geschlossenen Räumen, beispielsweise im Innenbereich von Bauwerken oder Fahrzeugen, wo bezüglich Geruch hohe Ansprüche an die eingesetzten Materialien gestellt werden, da das Auftreten von intensiven oder unangenehmen Gerüchen den Gebrauch des fertig verarbeiteten Objektes innerhalb einer vernünftigen Zeit erschweren bis verunmöglichen würden. Als Beschichtungen bevorzugt sind Schutzanstriche, Versiegelungen und Schutzbeschichtungen. Unter den Belägen sind besonders Bodenbeläge als bevorzugt zu nennen. Solche Beläge werden hergestellt, indem typischerweise eine reaktive Zusammensetzung auf den Untergrund gegossen und egalisiert wird, wo sie zu einem Bodenbelag aushärtet. Beispielsweise werden solche Bodenbeläge für Büros, Wohnbereiche, Spitäler, Schulen, Lagerhallen, Parkgaragen und andere private oder industrielle Anwendungen verwendet. Da viele dieser Anwendungen grossflächig erfolgen, kann schon eine geringfügige Freisetzung von Substanzen aus dem Belag zu arbeitshygienischen Schwierigkeiten und / oder Geruchsbelästigungen führen, selbst wenn es sich um eine Anwendung im Aussenbereich handelt. Allerdings wird ein Grossteil der Bodenbeläge im Innenbereich appliziert, weshalb auf eine geringe Geruchsbildung hier besonderes Gewicht gelegt wird.

Geeignete Substrate für eine Anwendung der beschriebenen feuchtigkeitshärtenden Polyurethanzusammensetzung sind beispielsweise anorganische Substrate wie beispielsweise Glas, Glaskeramik, Beton, Mörtel, Backstein, Ziegel, Gips und Natursteine wie Granit oder Marmor; Metalle wie Aluminium, Stahl, Buntmetalle, verzinkte Metalle; organische Substrate wie Holz, Kunststoffe wie PVC, Polycarbonate, PMMA, Polyester, Epoxide; beschichtete Substrate wie beispielsweise pulverbeschichtete Metalle; sowie Farben und Lacke, insbesondere Automobildecklacke. Bevorzugt sind Glas, Glaskeramik, Beton, Naturstein, Aluminium und Automobildecklacke.

Die Polyurethanzusammensetzung wird dabei mit der Oberfläche des jeweiligen Substrats zumindest partiell kontaktiert. Bevorzugt ist eine gleichmässige Kontaktierung in Form eines Kleb- oder Dichtstoffes, einer Beschichtung oder eines Belages, und zwar in den Bereichen, welche für den Einsatz eine Verbindung in Form einer Verklebung oder Abdichtung benötigen oder aber deren Oberfläche abgedeckt sein soll. Es kann durchaus nötig sein, dass das Substrat bzw. der zu kontaktierende Artikel im Vorfeld des Kontaktierens einer physikalischen Vorbehandlung unterzogen werden muss, beispielsweise durch Schleifen, Sandstrahlen, Bürsten oder dergleichen, oder durch Behandeln mit Reinigern oder Lösemitteln. Der Auftrag einer Haftvermittlerzusammensetzung, beispielsweise in Form eines Primers, ist jedoch aufgrund des in der Polyurethanzusammensetzung vorhandenen Aldiminoalkylsilans **ALS** nicht notwendig.

Bei der Anwendung der Polyurethanzusammensetzung kommt diese in Kontakt mit Feuchtigkeit, worauf sowohl die Isocyanatgruppen als auch andere mit Wasser reaktionsfähige Verbindungen mit Wasser reagieren. Enthält die Polyurethanzusammensetzung Polyaldimine, so reagieren deren Hydrolyseprodukte mit einem Teil der Isocyanatgruppen, bevor diese mit Wasser reagieren können. Als Folge dieser und weiterer Reaktionen härtet die Zusammensetzung aus. Gleichzeitig hydrolysiert das in der Polyurethanzusammensetzung enthaltene Aldiminoalkylsilan **ALS** in der bereits beschriebenen Weise und trägt in der Folge zu einer Verbesserung der Haftung zum Substrat bei. Der bei der Hydrolyse freigesetzte Aldehyd **ALD** verbleibt dabei vorzugsweise im wesentlichen vollständig in der ausgehärteten Polyurethanzusammensetzung. Entweder kann das zur Aushärtung benötigte Wasser aus der Luft stammen (Luftfeuchtigkeit), oder die Polyurethanzusammensetzung kann mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Polyurethanzusammensetzung eine Wasser enthaltende Komponente zugesetzt werden, zum Beispiel in Form einer wasserhaltigen Paste, die beispielsweise über einen Statikmischer eingemischt wird.

Wie bereits erwähnt, können die erfindungsgemässen Aldiminoalkylsilane **ALS** aber auch als Bestandteil von Haftvermittlerzusammensetzungen wie Haftvermittlerlösungen, Vorbehandlungsmitteln, Voranstrichen, Reinigern oder Primern vorhanden sein. Solche Haftvermittlerzusammensetzungen enthalten zusätzlich zu einem Aldiminoalkylsilan **ALS** mindestens ein Lösemittel, sowie optional weitere, in der Lackindustrie üblicherweise eingesetzte Komponenten.

Als Lösemittel in einer solchen Haftvermittlerzusammensetzung sind beispielsweise die folgenden geeignet:
Alkohole wie beispielsweise Methanol, Ethanol, Isopropanol oder Butanol; Ketone wie beispielsweise Aceton, Methylethylketon, Diisobutylketon, Acetonylaceton, Mesityloxid, sowie cyclische Ketone wie beispielsweise Methylcyclohexanon und Cyclohexanon; Ester, beispielsweise Acetate wie Ethylacetat, Propylacetat oder Butylacetat, Formiate, Propionate oder Malonate; Ether wie beispielsweise Ketonether, Esterether und Dialkylether wie Diisopropylether, Diethylether, Dibutylether, Diethylenglycoldiethylether sowie Ethylenglycoldiethylether; aliphatische und aromatische Kohlenwasserstoffe wie beispielsweise Toluol, Xylol, Heptan, Octan sowie unterschiedliche Erdölfraktionen wie Naphtha, White Spirit, Petrolether oder Benzin; halogenierte Kohlenwasserstoffe wie beispielsweise Methylenchlorid; sowie N-alkylierte Lactame wie beispielsweise N-Methylpyrrolidon.
Als weitere Komponente in der Haftvermittlerzusammensetzung kann ein Bindemittel vorhanden sein, wobei insbesondere Polyurethanpolymere mit Isocyanatgruppen und / oder Silangruppen erwähnt werden sollen; oder es können Polyisocyanate vorhanden sein, zum Beispiel Tris-(4-isocyanatophenyl)-methan, Tris-(4-isocyanatophenyl)-thiophosphat, die bereits erwähnten monomeren MDI, TDI, HDI und IPDI, sowie Oligo-, Poly- oder Copolymere dieser Monomere, wie polymeres HDI, polymeres MDI, beispielsweise kommerziell erhältlich als Voranate® M 229 (Dow), Desmodur® VL R 20 (Bayer), oder Allophanate, Biurete, Uretdione und Isocyanurate dieser Monomere, insbesondere HDI-Biurete, wie beispielsweise kommerziell erhältlich als Desmodur® N-100 (Bayer), Luxate® HDB 9000 (Lyondell/Bayer), HDI-Trimere, wie beispielsweise kommerziell erhältlich als Desmodur® N-3300 (Bayer), Desmodur® N-3600 (Bayer), Luxate® HT 2000 (Lyondell/Bayer), Desmodur® XP 2410, HDI-Dimere, wie beispielsweise kommerziell erhältlich als Desmodur® N-3400 (Bayer), Luxate® HD 100 (Lyondell/Bayer), IPDI-Trimere, wie beispielsweise kommerziell erhältlich als Desmodur® Z 4470 (Bayer), Vestanat® T 1890 (Degussa), Luxate® IT 1070 (Lyondell/Bayer), HDIund IPDI-Allophanate, TDI-Trimere, wie beispielsweise kommerziell erhältlich als Desmodur® IL (Bayer), TDI-Addukte, wie beispielsweise kommerziell erhältlich als Desmodur® L (Bayer), TDI-/HDI-Polymere, wie beispielsweise kommerziell erhältlich als Desmodur® HL (Bayer), Polurene® IK D (Sapici), Hartben AM 29 (Benasedo).
Als weitere mit Wasser reaktive Verbindungen können beispielsweise Polyaldimine, Polyketimine, Oxazolidine, weitere Organoalkoxysilane wie zum Beispiel Aminoalkylsilane, Aminosilane mit sekundären Aminogruppen, Epoxyalkylsilane, Mercaptoalkylsilane, Vinylsilane, Ureidoalkylsilane, Methacryloxyalkylsilane, Alkylsilane, Isocyanatoalkylsilane in der Haftvermittlerzusammensetzung vorhanden sein, wobei diese als Vernetzer und / oder als Trocknungsmittel wirken können. Aminosilane und / oder Mercaptoalkylsilane können auch in der Form von Addukten mit Epoxyalkylsilanen, beispielsweise mit 3-Glycidyloxypropylsilanen, vorhanden sein. Als zusätzliche Bestandteile der Haftvermittlerzusammensetzung besonders bevorzugt sind dabei Aminoalkylsilane **AS** der Formel (I).
Ebenfalls als Bestandteil der Haftvermittlerzusammensetzung verwendet werden können Katalysatoren für die Hydrolyse sowohl von Aldiminogruppen als auch von Silangruppen, und zwar beispielsweise in der Form von organischen Carbonsäuren wie Benzoesäure oder Salicylsäure, organischen Carbonsäureanhydriden wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, oder andere organische oder anorganische Säuren, oder Mischungen der vorgenannten Säuren; sowie Katalysatoren für die Reaktion von Isocyanatgruppen, beispielsweise Zinnverbindungen wie Zinn(II)-octoat, Monobutylzinntrichlorid, Dibutylzinndichlorid, Dibutylzinnoxid, Dibutylzinndiacetat, Dibutylzinndilaurat, Dibutylzinndiacetylacetonat, Dibutylzinndicarboxylate, Dioctylzinndicarboxylate, Alkylzinnthioester, Bismutverbindungen wie Bismut(III)-octoat, Bismut(III)-neodecanoat, Zinkverbindungen wie Zink(II)-octoat, sowie aminogruppenhaltige Verbindungen wie beispielsweise 2,2'-Dimorpholinodiethylether, 1,4-Diazabicyclo[2.2.2]octan, 1,8-Diazabicyclo[5.4.0]undec-7-en; sowie weitere Katalysatoren wie Titanate und Zirkonate.
Weiterhin können in der Primerchemie übliche Netzmittel, Füllstoffe und Additive eingesetzt werden. Beispiele nicht limitierender Art hierfür sind Kieselsäuren, Talk, Russ, organische und anorganische Pigmente, Stabilisatoren, Bentonite, sowie chemische und physikalische Trocknungsmittel.
Die beschriebene Haftvermittlerzusammensetzung wird unter Ausschluss von Feuchtigkeit hergestellt und aufbewahrt.

Die beschriebene Haftvermittlerzusammensetzung wird verwendet als Haftbrücke zwischen einem Substrat und einer Polymerzusammensetzung, beispielsweise einem Klebstoff, Dichtstoff oder einer Beschichtung. Um mittels der Haftvermittlerzusammensetzung einen zuverlässigen Haftungsaufbau zu einem Substrat zu erhalten, muss der Haftvermittlerzusammensetzung eine gewisse minimale Zeitspanne, die sogenannte "Ablüftezeit", zur Verfügung stehen, bevor die Polymerzusammensetzung appliziert wird. Der Zeitraum zwischen dem Auftragen der Haftvermittlerzusammensetzung und der Applikation der Polymerzusammensetzung, innerhalb dessen ein zuverlässiger Haftungsaufbau zum Substrat noch gewährleistet ist, wird "Offenzeit" genannt und ist meistens beschränkt. Nach Überschreiten der Offenzeit findet nur ein unvollständiger oder gar kein Haftungsaufbau zum Substrat mehr statt. Eine Haftvermittlerzusammensetzung, welche ein Aldiminoalkylsilan **ALS** enthält, weist eine lange Offenzeit von mindestens einer Woche auf. Die lange Offenzeit wird durch die Tatsache ermöglicht, dass die Aldiminogruppen der Aldiminoalkylsilane **ALS**, im Gegensatz zu den Aminogruppen von Aminoalkylsilanen **AS**, mit dem in der Luft enthaltenen Kohlendioxid nicht oder nur sehr wenig reagieren, wodurch sie für die Reaktion mit einer nachfolgend applizierten Polymerzusammensetzung wesentlich länger zur Verfügung stehen.

Geeignete Substrate für eine Anwendung der beschriebenen Haftvermittlerzusammensetzung sind beispielsweise anorganische Substrate wie beispielsweise Glas, Glaskeramik, Beton, Mörtel, Backstein, Ziegel, Gips und Natursteine wie Granit oder Marmor; Metalle wie Aluminium, Stahl, Buntmetalle, verzinkte Metalle; organische Substrate wie Holz, Kunststoffe wie PVC, Polycarbonate, PMMA, Polyester, Epoxide; beschichtete Substrate wie beispielsweise pulverbeschichtete Metalle; sowie Farben und Lacke, insbesondere Automobildecklacke. Bevorzugt sind Glas, Glaskeramik, Beton, Naturstein, Aluminium und Automobildecklacke.

Es ist von Vorteil, wenn die Substrate vor der Applikation vorbehandelt werden. Geeignete Vorbehandlungsmethoden sind physikalischer und/oder chemischer Natur und umfassen beispielsweise Schleifen, Sandstrahlen, Bürsten oder dergleichen, oder Behandeln mit Reinigern oder Lösemitteln.

Die Haftvermittlerzusammensetzung wird mittels Pinsel, Filz, Tuch oder Schwamm auf das Substrat aufgetragen. Dieser Auftrag kann manuell oder automatisch, insbesondere mittels Roboter, erfolgen. Weiterhin können auch mehrere Schichten der Haftvermittlerzusammensetzung appliziert werden.

Die beschriebene Haftvermittlerzusammensetzung wird vorteilhaft verwendet als Haftbrücke für Klebstoffe, Dichtstoffe oder Beschichtungen wie beispielsweise Bodenbeläge, insbesondere feuchtigkeitshärtende Kleb- oder Dichtstoffe auf Basis von Polyurethanen mit Isocyanatgruppen und / oder Silangruppen. Speziell geeignet ist diese Haftvermittlerzusammensetzung für Anwendungen, in welchen eine lange Offenzeit gefordert ist.

Die Haftvermittlerzusammensetzung reagiert bei Kontakt mit Wasser, beispielsweise in Form von Luftfeuchtigkeit, wobei das Aldiminoalkylsilan **ALS** in der bereits beschriebenen Weise hydrolysiert und in der Folge zu einer Verbesserung der Haftung zum Substrat beiträgt, und wobei weitere in der Haftvermittlerzusammensetzung anwesende, mit Wasser reaktive Komponenten, wie beispielsweise Isocyanatgruppen- oder Silangruppenhaltige Verbindungen, ebenfalls mit Wasser reagieren.

Auf die Haftvermittlerzusammensetzung wird, unter Einhaltung einer minimalen Ablüftezeit und einer maximalen Offenzeit, eine Polymerzusammensetzung in Form eines Klebstoffes, Dichtstoffes, einer Beschichtung oder eines Belages aufgebracht, wobei die mit Wasser in Kontakt gebrachte Haftvermittlerzusammensetzung als Haftbrücke zwischen dem Substrat und der ausgehärteten Polymerzusammensetzung dient.

Die in der Haftvermittlerzusammensetzung vorhandenen Lösemittel verdampfen, entweder vollständig oder teilweise innerhalb der Ablüftezeit, oder nach erfolgtem Auftrag der Polymerzusammensetzung durch diese hindurch in die Umgebung.

### Beispiele

### Beschreibung der Messmethoden

Die Infrarotspektren wurden auf einem FT-IR Gerät 1600 von Perkin-Elmer gemessen (horizontale ATR-Messeinheit mit ZnSe-Kristall); die Proben wurden unverdünnt als Filme aufgetragen. Die Absorptionsbanden sind in Wellenzahlen (cm⁻¹) angegeben (Messfenster: 4000-650 cm⁻¹).

¹H-NMR-Spektren wurden gemessen auf einem Spektrometer des Typs Bruker DPX-300 bei 300.13 MHz; die chemischen Verschiebungen d sind angegeben in ppm relativ zu internem Tetramethylsilan (TMS), Kopplungskonstanten *J* sind angegeben in Hz.

Die Viskosität wurde bei 20 °C auf einem Kegel-Platten-Viskosimeter der Fa. Haake (PK100 / VT-500) gemessen.

### Herstellung und Charakterisierung von Aldiminoalkylsilanen

### Beispiel 1 (Aldiminoalkylsilan ALS1)

In einem Rundkolben wurden unter Stickstoffatmosphäre 15.0 g 3-Aminopropyl-trimethoxysilan (Silquest® A-1110, OSi Crompton) in 25 ml trockenem Methanol gelöst. Dazu wurden ca. 2 g aktiviertes Molekularsieb 4Å gegeben und der Kolben ins Wasserbad gestellt. Unter kräftigem Rühren wurden aus einem Eintropftrichter innerhalb von 10 Minuten 13.3 g 2,2-Dimethyl-3-acetoxy-propanal zugegeben, wobei die Temperatur des Reaktionsgemisches 30 °C nicht überstieg. Danach wurde das Molekularsieb abfiltriert und die flüchtigen Bestandteile im Vakuum entfernt (10 mbar, 70 °C). Man erhielt eine farblose, bei Raumtemperatur dünnflüssige, klare und fruchtig riechende Flüssigkeit, die einen Aldimin-Gehalt, bestimmt als Amin-Gehalt, von 3.23 mmol NH₂/g aufwies.
IR: 2972, 2941, 2876sh, 2839, 1740 (C=O), 1668 (C=N), 1471, 1410, 1396, 1374, 1240, 1190, 1082, 1037, 929, 874, 816, 771sh, 698.
¹H-NMR (CDCl₃, 300 K): d 7.53 (*s*, 1H, CH=N), 4.02 (*s*, 2 H, CH₂O), 3.57-3.53 (*m*, ca. 8 H, CH₂Si-OC*H*₃ und CH₂Si-O-Si-OC*H*₃), 3.35 (*m*, 2 H, NCH₂), 2.05 (*s*, 3 H, CH₃CO), 1.69 (*m*, 2 H, C*H*₂CH₂N), 1.10 (*s*, 6 H, C(C*H*₃)₂-CH₂O), 0.59 (*m*, 2 H, CH₂Si).

### Beispiel 2 (Aldiminoalkylsilan ALS2)

In einem Rundkolben wurden unter Stickstoffatmosphäre 50.0 g 3-Aminopropyl-trimethoxysilan (Silquest® A-1110, OSi Crompton) in 40 ml trockenem Methanol gelöst. Dazu wurden ca. 5 g aktiviertes Molekularsieb 4Å gegeben und der Kolben ins Wasserbad gestellt. Unter kräftigem Rühren wurden aus einem Eintropftrichter innerhalb von 15 Minuten 50.4 g 2,2-Dimethyl-3-isobutyroxy-propanal zugegeben, wobei die Temperatur des Reaktionsgemisches 31 °C nicht überstieg. Danach wurde das Molekularsieb abfiltriert und die flüchtigen Bestandteile im Vakuum entfernt (10 mbar, 70 °C). Man erhielt eine farblose, bei Raumtemperatur dünnflüssige, klare und fruchtig riechende Flüssigkeit, die einen Aldimin-Gehalt, bestimmt als Amin-Gehalt, von 2.97 mmol NH₂/g aufwies.
IR: 2972, 2937, 2876, 2839, 1735 (C=O), 1668 (C=N), 1470, 1410, 1386, 1365, 1341, 1300, 1257, 1190, 1151, 1074, 996sh, 931, 917sh, 874, 816, 795sh, 763sh, 697.
¹H-NMR (CDCl₃, 300 K): d 7.54 (*s*, 1H, CH=N), 4.02 (*s*, 2 H, CH₂O), 3.61-3.53 (*m*, ca. 8 H, CH₂Si-OC*H*₃ und CH₂Si-O-Si-OC*H*₃), 3.37 (*m*, 2 H, NCH₂), 2.55 *(q×q*, *J* = 7.0, 1 H, C*H*(CH₃)₂), 1.67 (*m*, 2 H, C*H*₂CH₂N), 1.17-1.11 (*m*, 12 H, CH(C*H*₃)₂ und C(C*H*₃)₂-CH₂O), 0.60 (*m*, 2 H, CH₂Si).

### Beispiel 3 (Aldiminoalkylsilan ALS3)

In einen Rundkolben mit Rückflusskühler und Wasserabscheider (Dean Stark) wurden 52.7 g Formaldehyd (37% in Wasser, methanolfrei), 46.8 g Isobutyraldehyd, 100.0 g Laurinsäure und 0.5 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt rund 48 ml Destillat im Abscheider. Das Reaktionsgemisch (Aldehyd) wurde auf Raumtemperatur abgekühlt. In einem zweiten Rundkolben wurden unter Stickstoffatmosphäre 78.8 g 3-Aminopropyl-trimethoxysilan (Silquest® A-1110, OSi Crompton) in 80 g wasserfreiem Methanol gelöst. Dazu wurden ca. 10 g aktiviertes Molekularsieb 4Å gegeben und der Kolben ins Wasserbad gestellt. Unter kräftigem Rühren wurde innerhalb von 30 Minuten der oben beschriebene Aldehyd über eine Stahlkanüle zugetropft, wobei die Temperatur der Reaktionsmischung 32 °C nicht überstieg. Danach wurde das Molekularsieb abfiltriert und die flüchtigen Bestandteile im Vakuum entfernt (10 mbar, 70 °C). Man erhielt ein bernsteinfarbenes, bei Raumtemperatur dünnflüssiges, klares und vollständig geruchsfreies Öl, das einen Aldimin-Gehalt, bestimmt als Amin-Gehalt, von 2.10 mmol NH₂/g aufwies.
IR: 2950sh, 2923, 2852, 1737 (C=O), 1668 (C=N), 1466, 1416, 1394, 1374, 1343, 1301, 1248, 1188, 1156, 1085, 1036sh, 930, 873, 818, 785sh, 721, 698.
¹H-NMR (CDCl₃, 300 K): d 7.53 (*s*, 1 H, CH=N), 4.02 (*s*, 2 H, CH₂O), 3.56-3.53 (*m*, ca. 8 H, CH₂Si-OC*H*₃ und CH₂Si-O-Si-OC*H*₃), 3.37 (*m*, 2 H, NCH₂), 2.30 (*t*, *J* = 7.5, 2 H, CH₂CO), 1.62 (*m*, 4 H, C*H*₂CH₂N und C*H*₂CH₂CO), 1.26-1.23 (*m*, 16 H, CH₃-(C*H*₂)₈-CH₂CH₂CO), 1.10 (*s*, 6 H, C(C*H*₃)₂-CH₂O), 0.88 ("*t*", 3 H, *J*^{~} 6.6, C*H*₃-(CH₂)₁₀-CO), 0.59 (*m*, 2 H, CH₂Si).

### Beispiel 4 (Aldiminoalkylsilan ALS4)

In einem Rundkolben wurden unter Stickstoffatmosphäre 30.0 g (3,3-Dimethyl-4-amino)-butyl-trimethoxysilan (Silquest® A-1637, OSi Crompton) in 30 ml trockenem Methanol gelöst. Dazu wurden ca. 5 g aktiviertes Molekularsieb 4Å gegeben und und der Kolben ins Wasserbad gestellt. Unter kräftigem Rühren wurden aus einem Eintropftrichter innerhalb von 15 Minuten 24.5 g 2,2-Dimethyl-3-isobutyroxy-propanal zugegeben, wobei die Temperatur des Reaktionsgemisches 28 °C nicht überstieg. Danach wurde das Molekularsieb abfiltriert und die flüchtigen Bestandteile im Vakuum entfernt (10 mbar, 70 °C). Man erhielt eine farblose, bei Raumtemperatur dünnflüssige, klare und fruchtig riechende Flüssigkeit, die einen Aldimin-Gehalt, bestimmt als Amin-Gehalt, von 2.97 mmol NH₂/g aufwies.
IR: 2964, 2837, 1735 (C=O), 1670 (C=N), 1470, 1385, 1364, 1340, 1190, 1151, 1081, 1032, 992, 936, 887, 824, 788, 759, 677.

### Beispiel 5 (Aldiminoalkylsilan ALS5)

In einem Rundkolben wurden unter Stickstoffatmosphäre 14.3 g 2,2-Dimethyl-3-isobutyroxy-propanal in 20 ml trockenem Ethanol gelöst. Dazu wurden ca. 2 g aktiviertes Molekularsieb 4Å gegeben und der Kolben ins Wasserbad gestellt. Unter kräftigem Rühren wurden aus einem Eintropftrichter innerhalb von 15 Minuten 20.0 g N-(2-Aminoethyl)-3-aminopropyl-triethoxysilan (Silquest® Y-11763, OSi Crompton) zugegeben, wobei die Temperatur des Reaktionsgemisches 28 °C nicht überstieg. Danach wurde das Molekularsieb abfiltriert und die flüchtigen Bestandteile im Vakuum entfernt (10 mbar, 70 °C). Man erhielt ein farbloses, bei Raumtemperatur dünnflüssiges, klares und fruchtig riechendes Öl, das einen Aldimin-Gehalt, bestimmt als Amin-Gehalt, von 4.33 mmol NH₂/g aufwies.
IR: 3337 (N-H), 2972, 2929, 2881, 2840sh, 2804sh, 1732 (C=O), 1667 (C=N), 1470, 1408sh, 1389, 1365, 1344, 1305, 1260, 1192, 1156, 1097, 1074, 995, 954, 898, 789, 774, 690.

### Beispiel 6 (Aldiminoalkylsilan ALS6)

In einen Rundkolben mit Rückflusskühler und Wasserabscheider (Dean Stark) wurden 10.8 g Formaldehyd (37% in Wasser, methanolfrei), 9.6 g Isobutyraldehyd, 20.6 g Laurinsäure und 0.1 g 4-Toluolsulfonsäure eingewogen und unter Stickstoffatmosphäre gestellt. Die Mischung wurde im Ölbad unter kräftigem Rühren erwärmt, worauf sich Wasser abzuscheiden begann. Nach vier Stunden wurde die Apparatur im Wasserstrahlvakuum evakuiert. Es sammelten sich insgesamt rund 9.5 ml Destillat im Abscheider. Das Reaktionsgemisch (Aldehyd) wurde auf Raumtemperatur abgekühlt. In einem zweiten Rundkolben wurden unter Stickstoffatmosphäre 22.9 g N-(2-Aminoethyl)-3-aminopropyl-triethoxysilan (Silquest® Y-11763, OSi Crompton) in 20 g wasserfreiem Ethanol gelöst. Dazu wurden ca. 2 g aktiviertes Molekularsieb 4Å gegeben und der Kolben ins Wasserbad gestellt. Unter kräftigem Rühren wurde innerhalb von 15 Minuten der oben beschriebene Aldehyd über eine Stahlkanüle zugetropft, wobei die Temperatur des Reaktionsgemisches 26 °C nicht überstieg. Danach wurde das Molekularsieb abfiltriert und die flüchtigen Bestandteile im Vakuum entfernt (10 mbar, 70 °C). Man erhielt ein braunoranges, bei Raumtemperatur dickflüssiges, klares und geruchloses Öl, das einen Aldimin-Gehalt, bestimmt als Amin-Gehalt, von 3.21 mmol NH₂/g aufwies.
IR: 3337 (N-H), 2951 sh, 2921, 2852, 1737 (C=O), 1650, 1466, 1408, 1392, 1365, 1295, 1165, 1092sh, 1076, 953, 840, 784, 721.

### Aldiminoalkylsilan ALS7 (Vergleichsbeispiel)

In einem Rundkolben wurden unter Stickstoffatmosphäre 50.0 g 3-Aminopropyl-trimethoxysilan (Silquest® A-1110, OSi Crompton) in 100 ml trockenem Methanol gelöst. Dazu wurden ca. 10 g aktiviertes Molekularsieb 4Å gegeben und der Kolben ins Wasserbad gestellt. Unter kräftigem Rühren wurden aus einem Eintropftrichter innerhalb von 30 Minuten 32.6 g Benzaldehyd zugegeben, wobei die Temperatur des Reaktionsgemisches 35 °C nicht überstieg. Danach wurde das Molekularsieb abfiltriert und die flüchtigen Bestandteile im Vakuum entfernt (10 mbar, 70 °C). Man erhielt eine farblose, bei Raumtemperatur dünnflüssige, klare und intensiv nach Bittermandelöl riechende Flüssigkeit, die einen Aldimin-Gehalt, bestimmt als Amin-Gehalt, von 3.73 mmol NH₂/g aufwies.
IR: 3060, 3026, 2938, 2838, 1704, 1645 (C=N), 1580, 1493, 1451, 1411, 1377, 1343, 1310, 1250, 1189, 1076, 916, 881, 814, 753, 692.

### Aldiminoalkylsilan ALS8 (Vergleichsbeispiel)

In einem Rundkolben wurden unter Stickstoffatmosphäre 50.0 g 3-Aminopropyl-trimethoxysilan (Silquest® A-1110, OSi Crompton) in 100 ml trockenem Methanol gelöst. Dazu wurden ca. 10 g aktiviertes Molekularsieb 4Å gegeben und der Kolben ins Wasserbad gestellt. Unter kräftigem Rühren wurden aus einem Eintropftrichter innerhalb von 45 Minuten 32.6 g Isobutyraldehyd zugegeben, wobei die Temperatur des Reaktionsgemisches 35 °C nicht überstieg. Danach wurde das Molekularsieb abfiltriert und die flüchtigen Bestandteile im Vakuum entfernt (10 mbar, 70 °C). Man erhielt eine farblose, bei Raumtemperatur dünnflüssige, klare und stechend riechende Flüssigkeit, die einen Aldimin-Gehalt, bestimmt als Amin-Gehalt, von 4.49 mmol NH₂/g aufwies.
IR: 2962, 2936, 2871, 2838, 1735, 1670 (C=N),1466, 1410, 1386, 1366, 1343, 1302, 1249, 1192, 1082, 952, 872, 814, 695.

### Beispiel 7 (Aldiminoalkylsilan ALS3 in Polyaldimin)

In einen Rundkolben wurden 10.0 g alpha, omega-Polyoxypropylendiamin (Jeffamine® D-230, Huntsman; Amin-Gehalt = 8.29 mmol NH₂/g) und 2.8 g 3-Aminopropyl-trimethoxysilan (Silquest® A-1110, OSi Crompton) eingewogen und unter Stickstoffatmosphäre gestellt. Der Kolben wurde ins Wasserbad gestellt. Unter kräftigem Rühren wurden aus einem Eintropftrichter innerhalb von 20 Minuten 30.5 g frisch destilliertes 2,2-Dimethyl-3-lauroyloxy-propanal zugegeben, wobei die Temperatur des Reaktionsgemisches 32 °C nicht überstieg. Danach wurden die flüchtigen Bestandteile im Vakuum entfernt (10 mbar, 70 °C). Man erhielt eine farblose, bei Raumtemperatur dünnflüssige, klare und fast geruchlose Flüssigkeit, die einen Aldimin-Gehalt, bestimmt als Amin-Gehalt, von 2.37 mmol NH₂/g aufwies.
Die Analyse mittels Flüssigchromatographie zeigte einen sehr tiefen Gehalt an Kondensationsprodukten.
IR: 2957, 2922, 2852, 1737 (C=O), 1666 (C=N), 1466, 1418, 1374, 1343, 1249, 1156, 1107, 1020, 930, 873, 822, 722.

### Herstellung und Prüfung von feuchtigkeitshärtenden Polyurethanzusammensetzungen enthaltend Aldiminoalkylsilane

### Beispiele 8 bis 20

In einen Polypropylenbecher mit Schraubverschluss wurden ca. 50 g Polyurethanpolymer ***PP1*,** dessen Herstellung nachfolgend beschrieben wird, eingewogen und unter trockenen Stickstoff gestellt. Dazu wurden jeweils 1.0 Gewichts-% (bezogen auf das Polyurethanpolymer ***PP1***) der in der Tabelle 1 aufgeführten Aldiminoalkylsilane und, falls in Tabelle 1 aufgeführt, weitere Additive gegeben und mittels eines Zentrifugalmischers (SpeedMixer^{TM} DAC 150, FlackTek Inc.) homogen eingemischt.

Für die Bestimmung der Lagerstabilität wurden die Polyurethanzusammensetzungen sofort in innenlackierte Aluminiumtuben abgefüllt, diese luftdicht verschlossen und im Ofen bei 60 °C gelagert. Die Viskosität der Polyurethanzusammensetzungen wurde ein erstes Mal nach 12 Stunden, ein zweites Mal nach 7 Tagen Lagerdauer gemessen. Die Lagerstabilität ergibt sich aus dem Verhältnis der beiden Viskositätsmessungen (relative Zunahme der Viskosität der 7 Tage gelagerten Probe gegenüber der Viskosität der 12 Stunden gelagerten Probe). Die Ergebnisse sind in Tabelle 2 aufgeführt.

Zur Prüfung der Haftung wurden die oben beschriebenen Polyurethanzusammensetzungen der Beispiele 8 bis 20 nochmals frisch hergestellt und in der Tube bei Raumtemperatur aufbewahrt (keine Ofenlagerung). Für jedes Beispiel wurde dann wie folgt vorgegangen:
Eine Glasplatte (Floatglas; Firma Rocholl, Schönbrunn, Deutschland) der Masse 10 × 15 cm wurde auf der Luftseite (Prüfung mit UV-Licht, Wellenlänge 254 nm) längsseitig so mit Distanzband-J (Karochemie) beklebt, dass drei Glasbahnen von 1.5 × 15 cm erhalten wurden. Die Bahnen wurden dreimal jeweils mit einem mit Aceton befeuchteten Hygienetuch abgewischt. Nach einer Ablüftezeit von 5 Minuten wurde die Polyurethanzusammensetzung aus der Tube in einer Schichtdicke von 2 bis 3 mm auf die Glasbahnen aufgetragen, wobei darauf geachtet wurde, dass sie nicht über den Glasrand ausfloss. Die Glasplatte wurde während 7 Tagen im Normklima (23±1 °C, 50±5% relative Luftfeuchtigkeit) plan gelagert, wobei die Polyurethanzusammensetzung aushärtete. Darauf wurde die erste Bahn auf Haftung geprüft. Die Glasplatte wurde darauf während 7 Tagen bei Raumtemperatur im Wasser gelagert, trocknen gelassen und die zweite Bahn auf Haftung geprüft. Anschliessend wurde die Glasplatte während 7 Tagen im Kataplasma (70 °C, 100% Luftfeuchtigkeit) gelagert und die dritte Bahn auf Haftung geprüft.
Die Prüfung auf Haftung wurde wie folgt durchgeführt:
   Die Bahn der ausgehärteten Polyurethanzusammensetzung ("Raupe") wurde an einem Ende knapp über der Glasoberfläche (Klebefläche) eingeschnitten. Das eingeschnittene Ende der Raupe wurde von Hand festgehalten und dann vorsichtig und langsam, schälend in Richtung des anderen Raupenendes, von der Glasoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Glasoberfläche angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe von der Glasbahn gezogen bzw. geschnitten. Die Bewertung der Hafteigenschaften erfolgte anhand der nach dem Abziehen der Raupe auf der Oberfläche zurückbleibenden ausgehärteten Polyurethanzusammensetzung (Kohäsionsbruch), und zwar durch Abschätzen des kohäsiven Anteils der Haftfläche, gemäss folgender Skala:
      1 = mehr als 95% Kohäsionsbruch
      2 = 75 - 95% Kohäsionsbruch
      3 = 25 - 75% Kohäsionsbruch
      4 = weniger als 25% Kohäsionsbruch
      5 = 0% Kohäsionsbruch (rein adhäsiver Bruch)

Testresultate mit Kohäsionsbruchwerten von weniger als 75% gelten als ungenügend.

Die Ergebnisse der Prüfungen sind in Tabelle 2 aufgeführt.

Das Polyurethanpolymer ***PP1*** wurde wie folgt hergestellt:
845 g Polyol Acclaim® 4200 N (Bayer; Polypropylenoxid-Diol, OH-Zahl 28.5 mg KOH/g) und 115 g 4,4'-Methylendiphenyldiisocyanat (MDI; Desmodur® 44 MC L, Bayer) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 1.96 Gewichts-% und eine Viskosität bei 20 °C von 37 Pa·s.

**Tabelle 1:**

| Zusammensetzung der Polyurethanzusammensetzungen der **Beispiele 8 bis 20**. | | |
|---|---|---|
| **Beispiel** | Aldiminoalkylsilan (Gew.-%^{a}) | weitere Additive (Gew.-%^{a}) |
| **8** | ***ALS1*** (1.0) | - |
| **9** | ***ALS2*** (1.0) | - |
| **10** | ***ALS2*** (1.0) | Salicylsäure (0.1) |
| **11** | ***ALS3*** (1.0) | - |
| **12** | ***ALS4*** (1.0) | - |
| **13** | ***ALS5*** (1.0) | - |
| **14** | ***ALS5*** (1.0) | Benzoylchlorid (0.1) |
| **15** | ***ALS6*** (1.0) | - |
| **16** | ***ALS3*** (1.0) | Polyaldimin^{b} (9.0), Salicylsäure (0.1) |
| **17 (Ref.)**^{c} | - | - |
| **18 (Ref)**^{c} | - | Polyaldimin^{b} (9.0), Salicylsäure (0.1) |
| **19 (Comp.)**^{d} | ***ALS7*** (1.0) | - |
| **20 (Comp.)**^{d} | ***ALS8*** (1.0) | - |

| | | |
|---|---|---|
| ^{a} bezogen auf das Polyurethanpolymer ***PP1*** | | |
| ^{b} Dialdimin aus 2,2-Dimethyl-3-lauroyloxy-propanal und 1,3-Xylylendiamin | | |
| ^{c} Referenzbeispiele ohne Aldiminoalkylsilan | | |
| ^{d} Vergleichsbeispiele nach dem Stand der Technik | | |

**Tabelle 2:**

| Lagerstabilität und Haftung auf Glas der Polyurethanzusammensetzungen der **Beispiele 8 bis 20** | | | | |
|---|---|---|---|---|
| **Beispiel** | Viskositätszunahme in %^{a} | Haftung nach Normklima Lagerung | Haftung nach Wasserlagerung | Haftung nach Kataplasma Lagerung |
| **8** | 10 | 1 | 1 | 1 |
| **9** | 3 | 1 | 1 | 1 |
| **10** | 4 | 1 | 1 | 1 |
| **11** | 2 | 1 | 1 | 1 |
| **12** | 2 | 1 | 1 | 1 |
| **13** | 22 | 1 | 1 | 1 |
| **14** | 18 | 1 | 5 | 1 |
| **15** | 17 | 1 | 1 | 1 |
| **16** | 4 | 1 | 1 | 1 |
| **17 (Ref.)**^{b} | 5 | 5 | 5 | 5 |
| **18 (Ref)**^{b} | 1 | 5 | 5 | 5 |
| **19 (Comp.)**^{c} | 120 | 1 | 1 | 1 |
| **20 (Comp.)**^{c} | ca. 300 | 1 | 1 | 1 |

| | | | | |
|---|---|---|---|---|
| ^{a} = (Viskosität nach 7 d / Viskosität nach 12 Std. - 1) × 100% | | | | |
| ^{b} Referenzbeispiele ohne Aldiminoalkylsilan | | | | |
| ^{c} Vergleichsbeispiele nach dem Stand der Technik | | | | |

Aus Tabelle 2 ist ersichtlich, dass die Beispiele 8 bis 16, welche erfindungsgemässe Aldiminoalkylsilane enthalten, sowohl eine sehr gute Lagerstabilität (geringe Viskositätszunahme) als auch sehr gute Haftungen auf Glas aufweisen. Die Vergleichsbeispiele 19 und 20, welche Aldiminoalkylsilane nach dem Stand der Technik enthalten, weisen zwar ebenfalls gute Haftungen auf Glas auf, die Lagerstabilität ist jedoch mit Viskositätszunahmen von deutlich über 100% nicht gegeben. Die Referenzbeispiele 17 und 18 ohne Aldiminoalkylsilane weisen keine Haftung auf Glas auf.

### Herstellung und Prüfung von Haftvermittlerzusammensetzungen

### Beispiele 21 bis 26

Jeweils 1.0 Gewichts-% der erfindungsgemässen Aldiminoalkylsilane wurden in Methanol (***ALS1*** bis ***ALS4***) oder Ethanol (***ALS5*** und ***ALS6***) gelöst und als Haftvermittlerzusammensetzung für die Verbesserung der Haftung des Polyurethanpolymers ***PP1*** auf Glas geprüft. Dabei wurde wie folgt vorgegangen:

Wie bereits für die Beispiele 8 bis 20 beschrieben wurden für jedes Beispiel drei Glasplatten jeweils mit Distanzband beklebt. Jede der drei Glasbahnen pro Platte wurde zuerst dreimal jeweils mit einem mit Aceton befeuchteten Hygienetuch abgewischt und anschliessend jeweils einmal mit der jeweiligen Haftvermittlerzusammensetzung nach Beispiel 21 bis 26 befeuchteten Hygienetuch abgewischt. Nach einer Ablüftezeit von 15 Minuten (1. Glasplatte) bzw. einer Offenzeit von 8 Stunden (2. Glasplatte) und 7 Tagen (3. Glasplatte) wurde das Polyurethanpolymer ***PP1*** (= Beispiel 17, Referenz ohne Aldiminoalkylsilan) jeweils aufgetragen, gelagert, geprüft und beurteilt wie bereits für die Beispiele 8 bis 20 beschrieben.

Die Ergebnisse dieser Prüfungen sind in Tabelle 3 aufgeführt.

**Tabelle 3:**

| Haftung auf Glas des Polyurethanpolymers *PP1* (= Beispiel 17, Ref.), behandelt mit den Haftvermittlerzusammensetzungen nach **Beispiel 21 bis 26,** in Abhängigkeit der Ablüftezeit bzw. Offenzeit. | | | | |
|---|---|---|---|---|
| **Beispiel** | Haftvermittlerzusammensetzung | Haftung nach Normklima-Lagerung^{a} | Haftung nach Wasserlagerung^{a} | Haftung nach Kata-plasma-Lagerung^{a} |
| **21** | ***ALS1*** (1.0 %^{b} in MeOH) | 1/1/1 | 1/1/1 | 1/1/1 |
| **22** | ***ALS2*** (1.0 %^{b} in MeOH) | 1/1/1 | 1/1/1 | 1/1/1 |
| **23** | ***ALS3*** (1.0 %^{b} in MeOH) | 1/1/1 | 1/1/1 | 1/1/1 |
| **24** | ***ALS4*** (1.0 %^{b} in MeOH) | 1/1/1 | 1/1/1 | 1/1/1 |
| **25** | ***ALS5*** (1.0 %^{b} in EtOH) | 1/1/1 | 2/2/2 | 1/1/1 |
| **26** | ***ALS6*** (1.0 %^{b} in EtOH) | 1/1/1 | 2/2/2 | 1/1/1 |

| | | | | |
|---|---|---|---|---|
| ^{a} 1. Zahl: Glasplatte mit Ablüftezeit 15 Minuten / 2. Zahl: Glasplatte mit Offenzeit 8 Stunden / 3. Zahl: Glasplatte mit Offenzeit 7 Tage | | | | |
| ^{b} Gewichts-% | | | | |

Die Resultate von Tabelle 3 zeigen, dass das Polyurethanpolymer ***PP1*** (= Beispiel 17), welches ohne Vorbehandlung keine Haftung auf Glas aufwies (vergleiche Tabelle 2), nach einer Vorbehandlung mit den erfindungsgemässen Aldiminoalkylsilanen ***ALS1*** bis ***ALS6*** deutlich verbesserte Haftungen aufweist, und zwar sowohl bei einer Ablüftezeit von 15 Minuten als auch bei einer Offenzeit von 8 Stunden beziehungsweise von 7 Tagen.

### Herstellung und Prüfung von feuchtigkeitshärtenden Polyurethanzusammensetzungen als Klebstoffe

### Beispiele 27 bis 31

Die Beispiele 27 bis 31 belegen die Herstellung von feuchtigkeitshärtenden Polyurethanzusammensetzungen und ihre Verwendung als Klebstoffe auf Glas.

### Herstellung der Grundmasse PUR1:

In einem Vakuummischer wurden 1750 g Polyurethanpolymer ***PP2***, 500 g Polyurethanpolymer ***PP3***, 800 g Russ, 800 g calciniertes Kaolin, 240 g Diisodecylphthalat (DIDP; Palatinol® Z, BASF), 900 g Harnstoff-Verdickungsmittel und 10 g p-Tolylsulfonylisocyanat (Zusatzmittel TI® , Bayer) unter Feuchtigkeitsausschluss zu einer knollenfreien, homogenen Paste verarbeitet, diese unverzüglich in innenlackierte Aluminium-Kartuschen gefüllt und luftdicht verschlossen.

Das Polyurethanpolymer ***PP2*** wurde wie folgt hergestellt:
1290 g Polyol Acclaim® 4200 N (Polypropylenoxid-Diol, OH-Zahl 28.5 mg KOH/g; Bayer), 2580 g Polyol Caradol® MD34-02 (Polypropylenoxidpolyethylenoxid-Triol, OH-Zahl 35.0 mg KOH/g; Shell), 630 g 4,4'-Methylendiphenyldiisocyanat (MDI; Desmodur® 44 MC L, Bayer) und 500 g Diisodecylphthalat (DIDP; Palatinol® Z, BASF) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 2.07 Gewichts-%.

Das Polyurethanpolymer ***PP3*** wurde wie folgt hergestellt:
590 g Polyol Acclaim® 4200 N (Polypropylenoxid-Diol, OH-Zahl 28.5 mg KOH/g; Bayer), 1180 g Polyol Caradol® MD34-02 (Polypropylenoxidpolyethylenoxid-Triol, OH-Zahl 35.0 mg KOH/g; Shell) und 230 g Isophorondiisocyanat (IPDI; Vestanat® IPDI, Degussa) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 2.12 Gewichts-%.

Das Harnstoff-Verdickungsmittel wurde wie folgt hergestellt:
In einem Vakuummischer wurden 3000 g Diisodecylphthalat (DIDP; Palatinol® Z, BASF) und 480 g 4,4'-Methylendiphenyldiisocyanat (MDI; Desmodur® 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

Herstellung der Polyurethanzusammensetzungen:
In einem Vakuummischer wurden 300 g der oben beschriebenen Grundmasse ***PUR1*** mit den in Tabelle 4 aufgeführten Zusätzen unter Feuchtigkeitsausschluss zu einer knollenfreien, homogenen Paste verarbeitet, diese unverzüglich in innenlackierte Aluminium-Kartuschen gefüllt und luftdicht verschlossen.

**Tabelle 4:**

| Zusammensetzung der **Beispiele 27 bis 31.** | |
|---|---|
| **Beispiel** | 300 g Grundmasse ***PUR1*** und folgende Zusätze: |
| **27 (Ref.)**^{a} | 3 g Zinn-Kat.^{b} |
| **28** | 3 g Zinn-Kat.^{b} und 3 g Aldiminoalkylsilan ***ALS2*** |
| **29** | 3 g Zinn-Kat.^{b} und 3 g Aldiminoalkylsilan ***ALS3*** |
| **30 (Ref.)**^{**a**} | 10.5 g Polyaldimin^{c} und 0.3 g Säure-Kat.^{d} |
| **31** | 10.5 g Polyaldimin^{c}, 0.3 g Säure-Kat.^{d} |
| | und 3 g Aldiminoalkylsilan ***ALS2*** |

| | |
|---|---|
| ^{a} Referenzbeispiele ohne Aldiminoalkylsilan | |
| ^{b} Di-n-butyl-zinn-dichlorid (1.8 Gewichts-% in DIDP) | |
| ^{c} Dialdimin aus 2,2-Dimethyl-3-isobutyroxy-propanal und 1,3-Xylylendiamin | |
| ^{d} Salicylsäure (5 Gewichts-% in Dioctyladipat) | |

Die frisch hergestellten Polyurethanzusammensetzungen der Beispiele 27 bis 31 wurden anschliessend auf eine gereinigte Glasplatte aufgetragen. Dabei wurde für jedes der Beispiele wie folgt vorgegangen:

Eine Glasplatte (Floatglas; Firma Rocholl, Schönbrunn, Deutschland) der Masse 10 × 15 cm wurde auf der Luftseite (Prüfung mit UV-Licht, Wellenlänge 254 nm) dreimal jeweils mit einem mit Aceton befeuchteten Hygienetuch abgewischt. Nach einer Ablüftezeit von 5 Minuten wurde die Polyurethanzusammensetzung aus der Kartusche über eine Rundspitze als Raupen von ca. 7 mm Durchmesser längsseitig auf die Glasplatte aufgetragen (15 cm Raupenlänge; 3 Raupen), wobei der Abstand zwischen zwei Raupen mindestens 20 mm betrug. Unmittelbar nach dem Auftragen wurden die Raupen längsseitig jeweils mit einem LDPE-Streifen belegt und mittels einer zweiten Glasplatte gleichmässig auf eine Breite von ca. 10 mm und eine Schichtdicke von ca. 2 mm verpresst. Die beklebte Glasplatte wurde während 7 Tagen im Normklima (23±1 °C, 50±5% relative Luftfeuchtigkeit) gelagert, wobei die Polyurethanzusammensetzung aushärtete. Darauf wurde die erste Raupe auf Haftung geprüft. Die Glasplatte wurde darauf während 7 Tagen bei Raumtemperatur im Wasser gelagert, trocknen gelassen und die zweite Raupe auf Haftung geprüft. Anschliessend wurde die Glasplatte während 7 Tagen im Kataplasma (70 °C, 100% Luftfeuchtigkeit) gelagert und die dritte Raupe auf Haftung geprüft.

Die Prüfung auf Haftung wurde wie folgt durchgeführt:
Die verpresste Raupe der ausgehärteten Polyurethanzusammensetzung wurde an einem Ende knapp über der Glasoberfläche (Klebefläche) eingeschnitten. Das eingeschnittene Ende der Raupe wurde mit einer Rundzange festgehalten und durch langsames Aufrollen der Raupe schälend in Richtung des anderen Raupenendes von der Glasoberfläche gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Glasoberfläche angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe von der Glasbahn gezogen bzw. geschnitten. Die Bewertung der Hafteigenschaften erfolgte anhand der nach dem Abziehen der Raupe auf der Oberfläche zurückbleibenden ausgehärteten Polyurethanzusammensetzung (Kohäsionsbruch), und zwar durch Abschätzen des kohäsiven Anteils der Haftfläche, gemäss folgender Skala:
   1 = mehr als 95% Kohäsionsbruch
   2 = 75 - 95% Kohäsionsbruch
   3 = 25 - 75% Kohäsionsbruch
   4 = weniger als 25% Kohäsionsbruch
   5 = 0% Kohäsionsbruch (rein adhäsiver Bruch)

Testresultate mit Kohäsionsbruchwerten von weniger als 75% gelten als ungenügend.

Die Ergebnisse der Prüfungen sind in Tabelle 5 aufgeführt.

**Tabelle 5:**

| Haftung auf Glas der Polyurethanzusammensetzungen der **Beispiele 27 bis 31.** | | | |
|---|---|---|---|
| **Beispiel** | Haftung nach Normklima-Lagerung | Haftung nach Wasserlagerung | Haftung nach KataplasmaLagerung |
| **27 (Ref.)**^{a} | 5 | 5 | 5 |
| **28** | 1 | 2 | 1 |
| **29** | 2 | 2 | 1 |
| **30 (Ref.)**^{a} | 5 | 5 | 5 |
| **31** | 1 | 1 | 1 |

| | | | |
|---|---|---|---|
| ^{a} Referenzbeispiele ohne Aldiminoalkylsilan | | | |

Die Resultate der Tabelle 5 zeigen, dass die Referenzbeispiele 27 und 30 ohne Aldiminoalkylsilane keine Haftung auf Glas aufweisen, während die Beispiele 28, 29 und 31 eine gute Haftung zeigen.

### Beispiele 32 bis 34

Die Beispiele 32 bis 34 belegen die Herstellung von feuchtigkeitshärtenden Polyurethanzusammensetzungen und ihre Verwendung als Klebstoffe auf Aluminium.

Herstellung der Grundmasse ***PUR2***:
In einem Vakuummischer wurden 2100 g Polyurethanpolymer ***PP4***, 1500 g calciniertes Kaolin, 650 g Russ, 740 g Diisodecylphthalat (DIDP; Palatinol® Z, BASF) und 10 g p-Tolylsulfonylisocyanat (Zusatzmittel TI® , Bayer) unter Feuchtigkeitsausschluss zu einer knollenfreien, homogenen Paste verarbeitet, diese unverzüglich in innenlackierte Aluminium-Kartuschen gefüllt und luftdicht verschlossen.

Das Polyurethanpolymer ***PP4*** wurde wie folgt hergestellt:
1125 g Polyol Acclaim® 4200 N (Polypropylenoxid-Diol, OH-Zahl 28.5 mg KOH/g; Bayer), 2250 g Polyol Caradol® MD34-02 (Polypropylenoxidpolyethylenoxid-Triol, OH-Zahl 35.0 mg KOH/g; Shell), 375 g Poly(hexamethylencarbonat)-diol (OH-Zahl 130; Aldrich Nr. 46,117-2), 750 g 4,4'-Methylendiphenyldiisocyanat (MDI; Desmodur® 44 MC L, Bayer) und 500 g Diisodecylphthalat (DIDP; Palatinol® Z, BASF) wurden nach bekanntem Verfahren bei 80 °C zu einem NCO-terminierten Polyurethanpolymeren umgesetzt. Das Reaktionsprodukt hatte einen titrimetrisch bestimmten Gehalt an freien Isocyanat-Gruppen von 2.55 Gewichts-%.

Herstellung der Polyurethanzusammensetzungen:
In einem Vakuummischer wurden 300 g der oben beschriebenen Grundmasse ***PUR2*** mit den in Tabelle 6 aufgeführten Zusätzen unter Feuchtigkeitsausschluss zu einer knollenfreien, homogenen Paste verarbeitet, diese unverzüglich in innenlackierte Aluminium-Kartuschen gefüllt und luftdicht verschlossen.

**Tabelle 6:**

| Zusammensetzung der **Beispiele 32 bis 34.** | |
|---|---|
| **Beispiel** | 300 g Grundmasse ***PUR2*** und folgende Zusätze: |
| **32 (Ref.)**^{a} | 3 g Zinn-Kat.^{b} |
| **33** | 3 g Zinn-Kat.^{b} und 3 g Aldiminoalkylsilan ***ALS1*** |
| **34** | 3 g Zinn-Kat.^{b} und 3 g Aldiminoalkylsilan ***ALS3*** |

| | |
|---|---|
| ^{a} Referenzbeispiel ohne Aldiminoalkylsilan | |
| ^{b} Di-n-butyl-zinn-dichlorid (1.8 Gewichts-% in DIDP) | |

Die frisch hergestellten Polyurethanzusammensetzungen der Beispiele 32 bis 34 wurden anschliessend auf gereinigte Aluminiumplatten aufgetragen. Dabei wurde für jedes der Beispiele wie folgt vorgegangen:
Je eine Roh-Aluminiumplatte mit tiefem Si-Gehalt (Typ AIMg3; Firma Rocholl, Schönbrunn, Deutschland) bzw. mit hohem Si-Gehalt (Typ AlMgSi1; Rocholl) der Masse 30 × 20 cm wurde einseitig gründlich mit Schleifwolle angeschliffen und die angeschliffene Seite dreimal jeweils mit einem mit Isopropanol befeuchteten Hygienetuch abgewischt. Nach einer Ablüftezeit von 5 Minuten wurde die angeschliffene Seite mit Sika® Aktivator (erhältlich bei Sika Schweiz AG) vorbehandelt und dann, nach weiteren 15 Minuten Ablüftezeit, die Polyurethanzusammensetzung als Raupen von ca. 7 mm Durchmesser aufgetragen (15 cm Raupenlänge; 3 Raupen), wobei der Abstand zwischen zwei Raupen mindestens 20 mm betrug. Unmittelbar nach dem Auftragen wurden die Raupen längsseitig jeweils mit einem LDPE-Streifen belegt und mittels einer Glasplatte gleichmässig auf eine Breite von ca. 10 mm und eine Schichtdicke von ca. 2 mm verpresst. Die Aluminiumplatte wurde während 7 Tagen im Normklima (23±1 °C, 50±5% relative Luftfeuchtigkeit) gelagert, wobei die Polyurethanzusammensetzung aushärtete. Darauf wurde die erste Raupe auf Haftung geprüft. Die Aluminiumplatte wurde darauf während 7 Tagen bei Raumtemperatur im Wasser gelagert, trocknen gelassen und die zweite Raupe auf Haftung geprüft. Anschliessend wurde die Aluminiumplatte während 7 Tagen im Kataplasma (70 °C, 100% Luftfeuchtigkeit) gelagert und die dritte Raupe auf Haftung geprüft.
Die Prüfung auf Haftung und die Bewertung der Hafteigenschaften wurde wie bei den Beispielen 27 bis 31 beschrieben durchgeführt.
Die Ergebnisse der Prüfungen sind in Tabelle 7 aufgeführt.

**Tabelle 7:**

| Haftung auf Aluminium der Polyurethanzusammensetzungen der **Beispiele 32 bis 34.** | | | | | | |
|---|---|---|---|---|---|---|
| **Beispiel** | Haftung nach Normklima-Lagerung | | Haftung nach Wasserlagerung | | Haftung nach Kataplasma-Lagerung | |
| | AlMg3 | AlMgSi1 | AlMg3 | AlMgSi1 | AlMg3 | AlMgSi1 |
| **32 (Ref.)**^{a} | 4 | 4 | 3 | 2 | 3 | 1 |
| **33** | 1 | 1 | 2 | 2 | 1 | 1 |
| **34** | 1 | 1 | 2 | 1 | 1 | 1 |

| | | | | | | |
|---|---|---|---|---|---|---|
| ^{a} Referenzbeispiel ohne Aldiminoalkylsilan | | | | | | |

Die Resultate von Tabelle 7 zeigen, dass die Beispiele 33 und 34 mit erfindungsgemässen Aldiminoalkylsilanen eine deutlich bessere Haftung auf Aluminium zeigen als das Referenzbeispiel 32 ohne Aldiminoalkylsilan.

## Patentansprüche

1. Aldiminoalkylsilan **ALS,** hergestellt aus der Reaktion von mindestens einem Aminoalkylsilan **AS** der Formel (I) 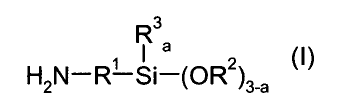 und mindestens einem Aldehyd **ALD** der Formel (II), 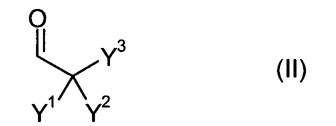 wobei
R¹ für eine lineare oder verzweigte, gegebenenfalls cyclische, Alkylengruppe mit 1 bis 20 C-Atomen, gegebenenfalls mit aromatischen Anteilen, und gegebenenfalls mit einem oder mehreren Heteroatomen, insbesondere Stickstoffatomen, steht;
R² für eine Alkylgruppe mit 1 bis 5 C-Atomen steht;
R³ für eine Alkylgruppe mit 1 bis 8 C-Atomen steht;
a für 0, 1 oder 2, insbesondere 0, steht;
Y¹ und Y² entweder,
unabhängig voneinander, je einen organischen Rest darstellen;
oder
zusammen einen carbocyclischen oder heterocyclischen Ring bilden, welcher eine Ringgrösse zwischen 5 und 8, bevorzugt 6, Atomen aufweist;
und Y³ entweder
für eine substituierte oder unsubstituierte Alkylgruppe, welche mindestens ein Heteroatom aufweist, steht;
oder
für eine verzweigte oder unverzweigte Alkyl- oder Alkylengruppe mit mindestens 10 C-Atomen steht;
oder
für eine substituierte oder unsubstituierte Aryl- oder Arylalkylgruppe steht;
oder
für O-R⁴ oder 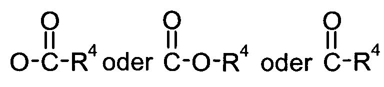 steht,
wobei R⁴ eine Alkyl-, Arylalkyl- oder Arylgruppe mit mindestens 3 C-Atomen ist und jeweils substituiert oder unsubstituiert ist.

2. Aldiminoalkylsilan **ALS** gemäss Anspruch 1, **dadurch gekennzeichnet, dass** R¹ für eine Methylen-, Propylen-, Methylpropylen-, Butylen- oder Dimethylbutylengruppe, insbesondere eine Propylengruppe, steht.

3. Aldiminoalkylsilan **ALS** gemäss Anspruch 1 oder 2, **dadurch gekennzeichnet, dass** R² für eine Methylgruppe oder für eine Ethylgruppe oder für eine Isopropylgruppe, insbesondere für eine Methylgruppe oder für eine Ethylgruppe, steht.

4. Aldiminoalkylsilan **ALS** gemäss einem der Ansprüche 1 - 3, **dadurch gekennzeichnet, dass** R³ für eine Methyl- oder für eine Ethylgruppe, insbesondere für eine Methylgruppe, steht.

5. Aldiminoalkylsilan **ALS** gemäss einem der vorhergehenden Ansprüche, **dadurch gekennzeichnet, dass** das Aminoalkylsilan **AS** der Formel (I) 3-Aminopropyl-trimethoxysilan, 3-Aminopropyl-triethoxysilan, 4-Amino-3,3-dimethylbutyl-trimethoxysilan, N-(2-Aminoethyl)-3-aminopropyl-trimethoxysilan oder N-(2-Aminoethyl)-3-aminopropyl-triethoxysilan, insbesondere 3-Aminopropyl-trimethoxysilan oder 3-Aminopropyl-triethoxysilan, ist.

6. Aldiminoalkylsilan **ALS** gemäss einem der vorhergehenden Ansprüche, **dadurch gekennzeichnet, dass** der Aldehyd **ALD** eine Verbindung der Formel (III) ist, 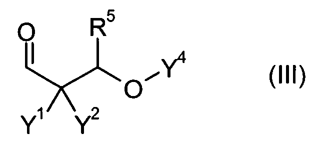 wobei
R⁵ für ein Wasserstoffatom oder für eine Alkyl- oder Arylalkyl- oder Arylgruppe steht;
und
Y⁴ für eine Alkyl- oder Arylalkyl- oder Arylgruppe steht.

7. Aldiminoalkylsilan **ALS** gemäss einem der Ansprüche 1 - 5 , **dadurch gekennzeichnet, dass** der Aldehyd **ALD** eine Verbindung der Formel (IV) ist, 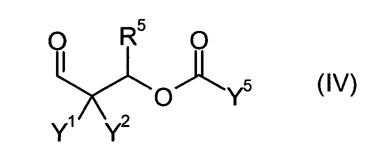 wobei R⁵ für ein Wasserstoffatom oder für eine Alkyl- oder Arylalkyl- oder Arylgruppe steht;
und Y⁵ entweder
ein Wasserstoffatom darstellt;
oder
eine Alkyl- oder Arylalkyl- oder Arylgruppe darstellt, welche gegebenenfalls mindestens ein Heteroatom, insbesondere ein Ether-Sauerstoff, aufweist, gegebenenfalls mindestens eine Carboxylgruppe enthält, und gegebenenfalls mindestens eine Estergruppe enthält;
oder
eine einfach oder mehrfach ungesättigte, lineare oder verzweigte Kohlenwasserstoffkette darstellt.

8. Aldiminoalkylsilan **ALS** gemäss Anspruch 7, **dadurch gekennzeichnet, dass** R⁵ für ein Wasserstoffatom steht; und dass
Y⁵ entweder
für eine lineare oder verzweigte Alkylkette mit 11 bis 30 Kohlenstoff-Atomen, gegebenenfalls mit mindestens einem Heteroatom, insbesondere mit mindestens einem Ether-Sauerstoff, steht;
oder
für eine einfach oder mehrfach ungesättigte lineare oder verzweigte Kohlenwasserstoffkette mit 11 bis 30 Kohlenstoff-Atomen steht;
oder
für einen Rest der Formel (V) oder (VI) steht, 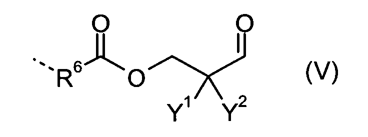 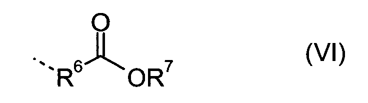 wobei
R⁶ entweder
für eine, lineare oder verzweigte oder cyclische, Alkylenkette mit 2 bis 16 Kohlenstoff-Atomen, gegebenenfalls mit mindestens einem Heteroatom, insbesondere mit mindestens einem Ether-Sauerstoff, steht;
oder
für eine einfach oder mehrfach ungesättigte, lineare oder verzweigte oder cyclische Kohlenwasserstoffkette mit 2 bis 16 Kohlenstoff-Atomen steht;
und
R⁷ für eine lineare oder verzweigte Alkylkette mit 1 bis 8 Kohlenstoff-Atomen steht.

9. Aldiminoalkylsilan **ALS** gemäss einem der vorhergehenden Ansprüche, **dadurch gekennzeichnet, dass** Y¹ = Y² = Methyl ist.

10. Aldiminoalkylsilan **ALS** gemäss Anspruch 7 oder 8, **dadurch gekennzeichnet, dass** der für die Herstellung des Aldiminoalkylsilans **ALS** verwendete Aldehyd **ALD** durch eine Veresterungsreaktion eines β-Hydroxyaldehyds mit einer Carbonsäure erhältlich ist, insbesondere ohne Verwendung eines Lösemittels, wobei der β-Hydroxyaldehyd, gegebenenfalls in situ, aus Formaldehyd, beziehungsweise Paraformaldehyd, und einem zweiten Aldehyd hergestellt wird,

11. Aldiminoalkylsilan **ALS** gemäss Anspruch 10, **dadurch gekennzeichnet, dass** der für die Herstellung des Aldiminoalkylsilans **ALS** verwendete Aldehyd **ALD** durch eine Veresterungsreaktion von 3-Hydroxy-pivalaldehyd mit einer Carbonsäure erhältlich ist, insbesondere ohne Verwendung eines Lösemittels, wobei 3-Hydroxypivalaldehyd gegebenenfalls in situ aus Formaldehyd, beziehungsweise Paraformaldehyd, und Isobutyraldehyd hergestellt wird.

12. Aldiminoalkylsilan **ALS** gemäss einem der Ansprüche 10 oder 11, **dadurch gekennzeichnet, dass** die für die Herstellung des Aldehyds **ALD** verwendete Carbonsäure ausgewählt ist aus der Gruppe umfassend Laurinsäure, Myristinsäure, Palmitinsäure, Stearinsäure, Ölsäure, Linolsäure, Linolensäure, Bernsteinsäure, Adipinsäure, Azelainsäure und Sebacinsäure, deren Gemische sowie deren technische Gemische mit Fettsäuren.

13. Aldiminoalkylsilan **ALS** gemäss einem der vorhergehenden Ansprüche, **dadurch gekennzeichnet, dass** das Aldiminoalkylsilan **ALS** die Formel (VII) oder (VIII) aufweist, 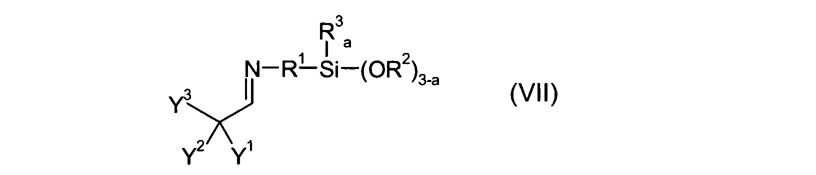 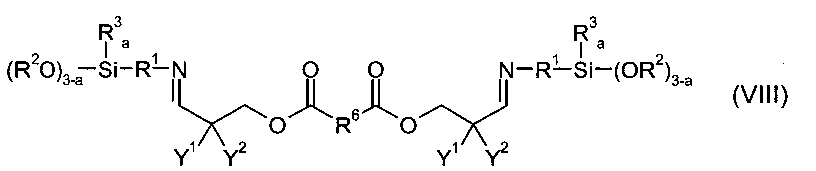 wobei
R⁶ entweder
für eine, lineare oder verzweigte oder cyclische, Alkylenkette mit 2 bis 16 Kohlenstoff-Atomen, gegebenenfalls mit mindestens einem Heteroatom, insbesondere mit mindestens einem Ether-Sauerstoff, steht;
oder
für eine einfach oder mehrfach ungesättigte, lineare oder verzweigte oder cyclische Kohlenwasserstoffkette mit 2 bis 16 Kohlenstoff-Atomen steht;
und
R⁷ für eine lineare oder verzweigte Alkylkette mit 1 bis 8 Kohlenstoff-Atomen steht.

14. Verfahren zur Herstellung eines Aldiminoalkylsilans **ALS** gemäss einem der Ansprüche 1 - 13, umfassend eine Umsetzung eines Aminoalkylsilans **AS** der Formel (I) 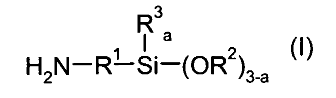 mit mindestens einem Aldehyd **ALD** der Formel (II), 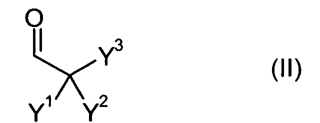 wobei das bei der Reaktion gebildete Wasser im wesentlichen vollständig aus der Reaktionsmischung entfernt wird.

15. Verfahren zur Herstellung eines Aldiminoalkylsilans **ALS** gemäss Anspruch 14, **dadurch gekennzeichnet, dass** für die Herstellung des Aldiminoalkylsilans **ALS** die Aldehydgruppen des Aldehyds **ALD** stöchiometrisch oder im stöchiometrischen Überschuss in Bezug auf die primären Aminogruppen des Aminoalkylsilans **AS** eingesetzt werden.

16. Verfahren zur Herstellung eines Aldiminoalkylsilans **ALS** gemäss Anspruch 14, **dadurch gekennzeichnet, dass** das Aminoalkylsilan **AS** in einer Mischung mit mindestens einem Polyamin mit primären aliphatischen Aminogruppen vorhanden ist und die Aldehydgruppen des Aldehyds **ALD** stöchiometrisch oder im stöchiometrischen Ueberschuss bezogen auf die Gesamtheit der primären Aminogruppen eingesetzt werden, wodurch nach der Umsetzung eine Mischung entsteht enthaltend sowohl das Aldiminoalkylsilan **ALS** als auch das entsprechend dem verwendeten Aldehyd **ALD** gebildete Polyaldimin.

17. Verwendung eines Aldiminoalkylsilans ALS gemäss einem der Ansprüche 1 - 13 in Zusammensetzungen, welche gegenüber Aminen reaktive Verbindungen, insbesondere Isocyanatgruppen aufweisende Verbindungen, besonders bevorzugt aromatische Isocyanatgruppen aufweisende Verbindungen, enthalten.

18. Verwendung eines Aldiminoalkylsilans **ALS** gemäss Anspruch 17, **dadurch gekennzeichnet, dass** die Zusammensetzung eingesetzt wird als Klebstoff, Dichtstoff, Beschichtung oder Belag.

19. Verwendung eines Aldiminoalkylsilans **ALS** gemäss einem der Ansprüche 1 - 13 in Haftvermittlerzusammensetzungen.

20. Hydrolyseverfahren, **dadurch gekennzeichnet, dass** ein Aldiminoalkylsilan **ALS** gemäss einem der Ansprüche 1 - 13 mit Wasser, insbesondere in gasförmigem Aggregatszustand, bevorzugt in Form von Luftfeuchtigkeit, in Kontakt gebracht wird, wobei ein Aldehyd **ALD** der Formel (II) freigesetzt wird.

21. Hydrolyseverfahren, **dadurch gekennzeichnet, dass** ein Aldiminoalkylsilan **ALS** gemäss einem der Ansprüche 1 - 13 mit Wasser in Form einer wasserhaltigen Komponente oder einer Wasser freisetzenden Komponente in Kontakt gebracht wird, wobei ein Aldehyd **ALD** der Formel (II) freigesetzt wird.

22. Feuchtigkeitshärtende Polyurethanzusammensetzung umfassend mindestens ein isocyanatgruppenhaltiges Polyurethanpolymer, hergestellt aus mindestens einem Polyisocyanat und mindestens einem Polyol;
und
mindestens ein Aldiminoalkylsilan **ALS** gemäss einem der Ansprüche 1 - 13.

23. Feuchtigkeitshärtende Polyurethanzusammensetzung gemäss Anspruch 22, **dadurch gekennzeichnet, dass** das Polyisocyanat für die Herstellung des Polyurethanpolymers ein Diisocyanat ist, insbesondere ausgewählt aus der Gruppe umfassend MDI, TDI, HDI, IPDI sowie deren Mischungen, besonders bevorzugt MDI und TDI sowie deren Mischungen.

24. Feuchtigkeitshärtende Polyurethanzusammensetzung gemäss Anspruch 22, **dadurch gekennzeichnet, dass** das Polyol für die Herstellung des Polyurethanpolymers ein mittleres Molekulargewicht von 1'000 bis 30'000 g/mol und eine mittlere OH-Funktionalität von 1.6 bis 3 aufweist und insbesondere ein Polyoxyalkylenpolyol oder ein Polyesterpolyol ist.

25. Feuchtigkeitshärtende Polyurethanzusammensetzung gemäss einem der Ansprüche 22 - 24, **dadurch gekennzeichnet, dass** das Aldiminoalkylsilan **ALS** in einer Menge von 0.01 - 10 Gewichts-%, bevorzugt 0.1 - 5 Gewichts-%, insbesondere 0.25 - 2.5 Gewichts-% in der Polyurethanzusammensetzung vorhanden ist.

26. Feuchtigkeitshärtende Polyurethanzusammensetzung gemäss einem der Ansprüche 22 - 25, **dadurch gekennzeichnet, dass** zusätzlich zum Aldiminoalkylsilan **ALS** ein Polyaldimin vorhanden ist.

27. Feuchtigkeitshärtende Polyurethanzusammensetzung gemäss einem der Ansprüche 22 - 26, **dadurch gekennzeichnet, dass** bei der Hydrolyse des Polyaldimins ein Aldehyd **ALD** der Formel (II) freigesetzt wird.

28. Verfahren der Applikation einer feuchtigkeitshärtenden Polyurethanzusammensetzung gemäss einem der Ansprüche 22 - 27, **dadurch gekennzeichnet, dass** diese bei oder nach der Applikation der Zusammensetzung auf ein Substrat in Kontakt mit Luftfeuchtigkeit oder mit Wasser in Form einer wasserhaltigen Komponente oder Wasser freisetzenden Komponente gebracht wird und in der Folge aushärtet, wobei ein Aldehyd **ALD** der Formel (II) freigesetzt wird, welcher vorzugsweise im wesentlichen vollständig in der ausgehärteten Polyurethanzusammensetzung verbleibt.

29. Verfahren gemäss Anspruch 28, **dadurch gekennzeichnet, dass** das Substrat zumindest im Bereich der Applikation der feuchtigkeitshärtenden Polyurethanzusammensetzung aus Glas, Glaskeramik, Beton, Naturstein, Aluminium oder Automobildecklack besteht.

30. Haftvermittlerzusammensetzung, **dadurch gekennzeichnet, dass** diese mindestens ein Aldiminoalkylsilan **ALS** gemäss einem der Ansprüche 1 - 13 enthält oder daraus besteht, insbesondere **dadurch gekennzeichnet, dass** diese zusätzlich ein Aminoalkylsilan **AS** der Formel (I) enthält.

31. Verfahren der Applikation einer Haftvermittlerzusammensetzung gemäss Anspruch 30, **dadurch gekennzeichnet, dass** diese bei oder nach der Applikation auf ein Substrat, insbesondere Glas, Glaskeramik, Beton, Naturstein, Aluminium oder Automobildecklack, mit Wasser oder Luftfeuchtigkeit in Kontakt gebracht wird, bevor ein Klebstoff, ein Dichtstoff, eine Beschichtung oder ein Belag darauf appliziert wird.
